# EUROPÄISCHE PATENTSCHRIFT

(11) **EP 0 702 834 B1**
(45) Veröffentlichungstag und Bekanntmachung des Hinweises auf die Patenterteilung: **20.08.1997**
(21) Anmeldenummer: 94916147.5
(22) Anmeldetag: 01.06.1994
(51) Int. Cl.: G21C 9/016

(54) **EINRICHTUNG ZUM AUFFANGEN VON KERNSCHMELZE AUS EINEM REAKTORDRUCKBEHÄLTER**
DEVICE FOR RECOVERING REACTOR-MELTDOWN PRODUCTS WHICH ESCAPE FROM A REACTOR PRESSURE VESSEL
DISPOSITIF PERMETTANT DE RECUPERER LES PRODUITS DE FUSION DU COEUR ISSUS DE LA CUVE D'UN REACTEUR

(30) Priorität: 08.06.1993 DE 4319093
(43) Veröffentlichungstag der Anmeldung: 27.03.1996
(73) Patentinhaber: SIEMENS AKTIENGESELLSCHAFT, 80333 München (DE)
(72) Erfinder: WISTUBA, Lothar, D-91074 Herzogenaurach (DE); HAU, Gerhard, D-72461 Albstadt (DE); HOLLMANN, Josef, D-96132 Schlüsselfeld (DE)
(86) Internationale Anmeldenummer: DE9400615
(87) Internationale Veröffentlichungsnummer: WO9429875

(56) Entgegenhaltungen:
- WO-A-85/00921
- DE-A- 3 938 111
- FR-A- 2 683 375
- US-A- 4 045 284
- PROCEEDINGS OF THE FITH INTERNATIONAL CONFERENCE ON EMERGING NUCLEAR ENERGY SYSTEMS, 6. Juli 1989, KARLSRUHE, FR GERMANY Seiten 19 - 24 H.H. HENNIES, G. KESSLER 'Improved Containment Concept for Future Pressurized Water Reactors' in der Anmeldung erwähnt

## Beschreibung

Die Erfindung bezieht sich auf eine Einrichtung zum Auffangen von Kernschmelze aus einem Reaktordruckbehälter
a) mit einer unterhalb des Reaktordruckbehälters angeordneten Vorkammer,
b) mit einer Ausbreitungskammer mit einem Boden, welcher eine Ausbreitungsfläche für die Kernschmelze bildet,
c) mit einen die Vorkammer mit des Ausbreitungskammer verbindenden Verbindung
   und
d) mit einer zwischen der Vorkammer und der Ausbreitungskammer angeordneten die Verbindung Verschließenden Trennwand, die von der Kernschmelze thermisch zerstörbar ist.
Sie ist insbesondere beim EPR-Druckwasserreaktor einsetzbar.

Die bisher üblichen Sicherheitsüberlegungen gingen bei Kernreaktoren davon aus, daß infolge von Materialwahl und Dimensionierung ein Versagen des Reaktordruckbehälters nicht zu befürchten ist. Im Zuge intensiver sicherheitstechnischer Überlegungen zur Kernenergienutzung wird aber neuerdings auch der Fall in die Überlegungen einbezogen, daß ein Reaktordruckbehalter einmal "versagt", und sei dieser Fall auch noch so unwahrscheinlich. Insbesondere ein neuer Reaktortyp, der Europäische Druckwasserreaktor EPR (European Pressurized Water Reactor), basiert auf solchen Überlegungen. Im Gegensatz zur bisherigen Sicherheitsphilosophie wird bei diesem Reaktortyp ein Kernschmelzunfall - ein sogenannter GAU (größter anzunehmender Unfall) - nicht generell ausgeschlossen. Auch sind Überlegungen angestellt worden, ob nicht während eines Kernschmelzunfalls Dampfexplosionen auftreten können, und ob der in einer solch kritischen Phase schlagartig entstehende Wasserdampf den Druckbehälter nicht zum Platzen bringen kann. Es besteht keine Frage, daß solche Unfälle - so theoretisch sie auch sein mögen - beherrschbar sein müssen.

Bei einem hypothetischen schweren Störfall in einem Kernkraftwerk mit wassergekühltem Reaktor wird also angenommen, daß der Reaktorkern schmilzt. Danach tritt Kernschmelze auf der unteren Seite des Reaktordruckbehälters in die Schildgrube des Reaktorsicherheitsbehälters aus. Um einen solchen Störfall beherrschen zu können, müssen geeignete bauliche Maßnahmen getroffen werden, die verhindern, daß die unter Umständen mit Überdruck aus dem Reaktordruckbehälter austretende und sich im Bodenbereich der Kernreaktoranlage ansammelnde Schmelze zu einem Versagen des Reaktorsicherheitsbehälters (Containment) führt.

Aus der deutschen Patentschrift 28 40 086 ist beispielsweise eine Kernreaktoranlage mit einer Auffangeinrichtung für einen abschmelzenden Reaktorkern bekannt, bei der unterhalb der den Reaktordruckbehälter umgebenden Schildgrube ein vertikaler Abflußkanal vorgesehen ist. Dieser Abflußkanal durchsetzt den Reaktorsicherheitsbehälter und führt in eine unterhalb des Reaktorsicherheitsbehälters angeordnete Schmelzgrube. Dort wird die aus dem Reaktordruckbehälter austretende Kernschmelze auf ein Absorberbett verteilt, das durch eine mit wasserfreien Stoffen gefüllte stählerne Wanne gebildet ist. Nach Aufschmelzen dieser stählernen Wanne gelangt die Schmelze auf den Boden der Schmelzgrube. Der Boden und die Seitenwände dieser Schmelzgrube sind wassergekühlt, so daß die Schmelze allmählich erstarrt.

Bei der aus der deutschen Patentschrift 29 25 680 bekannten Kernreaktoranlage ist zur Aufnahme der Schmelze ebenfalls eine unterhalb dem Niveau des Reaktorfundamentes angeordnete Auffangwanne vorgesehen. Die Auffangwanne befindet sich dabei nicht direkt unterhalb des Reaktorkerns, sondern ist neben dem Reaktorkern angeordnet und über eine horizontal über der Auffangwanne auslaufenden Rutsche mit dem Boden des Reaktorgebäudes verbunden.

Die WO 85/00921 A1 behandelt eine Kernkraftanlage mit einem unterhalb des Reaktordruckbehälters und unterhalb des Bodens der Kemkraftanlage angeordneten Kemauffang- und Wärmeaustauschstruktur. Diese Struktur hat eine hinreichend kleine Querschnittsfläche, so daß darin aufgefangene Kernschmelze unter einer kritischen Menge gehalten werden kann. Vom Boden der Kemkraftanlage führt ein Isolationskanal zu der Struktur. In diesem Isolationskanal sind Mittel zur Verzögerung des Herabströmens der Kemschmelze vorgesehen. Diese Mittel bestehen aus Stahlplatten, die jeweils den Querschnitt des Isolationskanal vollständig verschließen.

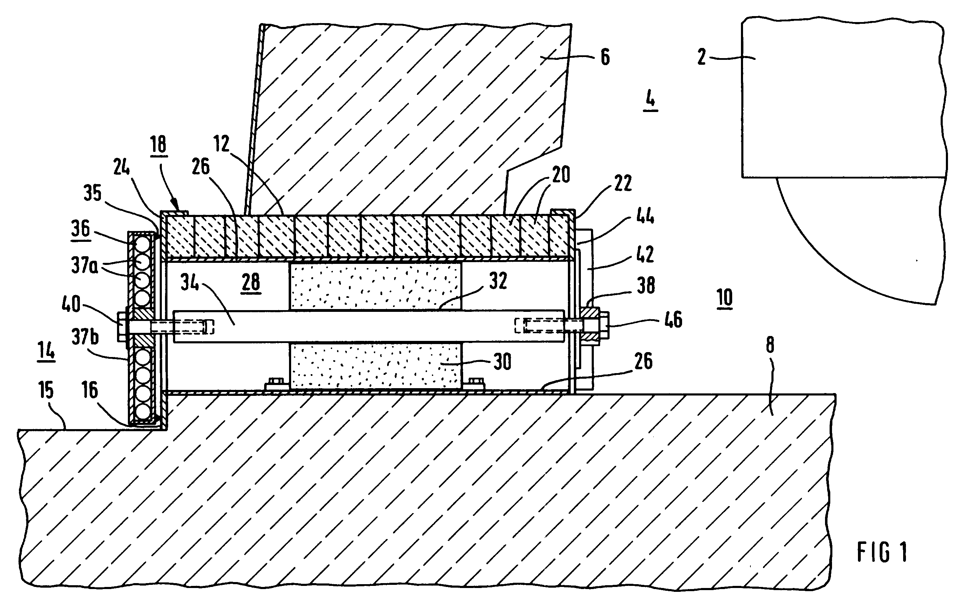

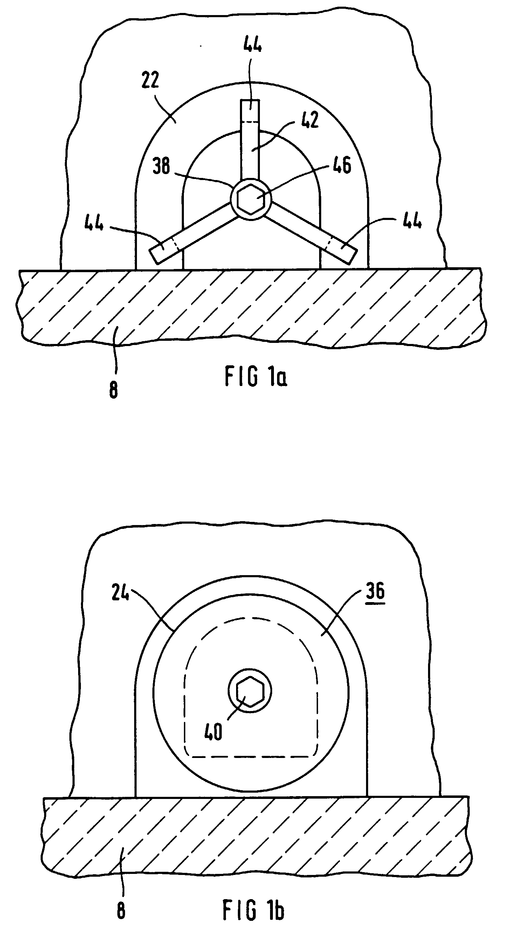

Aus "Emerging Nuclear Energy Systems 1989, Icenes 89, Karlsruhe 3. bis 6. Juli, Proceedings of the Fifth International Conference on Emerging Nuclear Systems", Seiten 19 bis 24, ist aus Figur 1 eine Kernschmelzenauffangvorrichtung bekannt, bei der innerhalb des Reaktorsicherheitsbehälters direkt unterhalb des Reaktordruckbehälters eine gekühlte Auffangwanne angeordnet ist, in der sich die Schmelze großflächig ausbreiten und in direktem Kontakt mit Wasser abkühlen kann.

Aus der EP-A1-0 392 604 ist eine Auffang- und Kühleinrichtung bekannt, bei der sich der Wasservorrat unterhalb des Reaktordruckbehälters befindet. Im Kernschmelzfall würden die Kernschmelze und Teile des Reaktordruckbehälters sowie seiner Einbauten direkt in das Wasserbad fallen. Dies ist vom Standpunkt einer effektiven Kühlung und einer Vermeidung von Dampfexplosionen nicht zweckmäßig. Angestrebt wird vielmehr ein Abkühlvorgang, bei dem die ausfließende Kernschmelze nicht sofort auf eine größere Menge Wasser trifft.

In der gleichzeitig eingereichten, Patentanmeldung EP-A-0 702 835 mit dem Titel "Einrichtung und Verfahren zum Auffangen und Kühlen von Kernschmelze" wird eine Einrichtung der eingangs genannten Art, speziell eine Kernrückhalteeinrichtung (Core Retention Device) nach dem Ausbreitungsprinzip angegeben, bei der im Falle eines Versagens des Reaktordruckbehälters die Heftigkeit der Dampfbildung infolge des Kontakts zwischen der Kernschmelze und etwa vorhandenem Wasser erheblich reduziert oder sogar ganz vermieden ist. Diese Einrichtung ist ausgerüstet
a) mit einer unterhalb des Reaktordruckbehälters angeordneten Vorkammer,
b) mit einer Ausbreitungskammer für die Kernschmelze,
c) mit einem Kanal zwischen der Vorkammer und der Ausbreitungskammer, der mit einer von der Kernschmelze zerstörbaren Trennwand versehen ist, und
d) mit einem Kühlmittelreservoir, das über ein von der Kernschmelze zerstörbares Verschlußorgan an die Ausbreitungskammer angeschlossen ist.
Die Ausbreitungskammer ist hier betriebsbedingt trocken.

Eine solche Trennwand zwischen der Vorkammer und der Ausbreitungskammer ist auch bereits in Figur 4 der Europäischen Patentanmeldung EP-A-0 563 739 gezeigt. Sie besteht aus einer dünnen Stahlplatte und schottet den Auslaß der Vorkammer zu einer Auslaufrinne in Richtung Ausbreitungskammer so lange ab, bis sie durch die Schmelzenhitze zerstört wird. Die Ausbreitungskammer ist hier speziell bei Eintritt der Kernschmelze bereits mit Kühlwasser gefüllt. Die eingangs genannte Einrichtung bezieht sich auf diese ältere Anmeldung, wobei allerdings offenbleiben kann, ob die Ausbreitungskammer im Einsatzfalle trocken oder wassergefüllt ist.

Das derzeitige EPR-Konzept geht davon aus, daß die Ausbreitungskammer betriebsbedingt trocken ist. Jedoch sollte auch gewährleistet sein, daß die Trennwand Dichtheit gegen eindringendes Wasser von der möglicherweise durch einen Unfall gefluteten Ausbreitungskammer in die Vorkammer und damit in die trockene Reaktorgrube sicherstellt. Weiterhin sollte Dichtheit nach Erdbeben und Druckwellen durch Bleed gewährleistet sein. Schließlich sollte auch von der Seite des Ausbreitungsraums eine Austauschbarkeit der Trennwand bei wiederkehrenden Prüfungen gegeben sein.

An die Trennwand sind auch von der Reaktorseite her einige Anforderungen zu stellen. Die Austrittsöffnung von der Vorkammer in Richtung auf die Ausbreitungskammer soll schnell und sicher durch den Kernschmelzekontakt geöffnet werden. Weiterhin soll der freie Durchtritt der Kernschmelze durch die Austrittsöffnung gewährleistet sein. Darüber hinaus besteht die Forderung nach Dichtheit auch bei einem Druck von etwa 20 bar in der Reaktorgrube. Bevorzugt sollte auch in der Trennwand eine Strahlen- und Neutronenabsorption gegeben sein, denn die Anlagenräume sollten begehbar sein. Schließlich sollte die Trennwand eine gewisse Langzeitbeständigkeit besitzen, wobei man gegenwärtig von etwa 60 Jahren ausgeht.

Der Erfindung liegt die Aufgabe zugrunde, eine Einrichtung der eingangs genannten Art so auszubilden, daß die Trennwand bei Kernschmelzekontakt schnell und sicher zerstört wird, wobei der freie Durchtritt der Kernschmelze durch die dadurch gebildete Austrittsöffnung sichergestellt sein soll.

Diese Aufgabe wird erfindungsgemäß dadurch gelöst, daß die Trennwand aus mehreren Teilen besteht, wovon mindestens ein Teil durch die Kernschmelze thermisch zerstörbar ist, wobei dieses Teil mit anderen Teilen der Trennwand derart verbunden ist, daß bei Zerstörung des genannten einen Teils ein Strömungsweg für die Kernschmelze von der Vorkammer in die Ausbreitungskammer freigegeben wird.

Das besagte eine Teil ist somit das Auslöseelement für die Zerstörung der gesamten Trennwand. Diese Zerstörung kann konzeptionell weitgehend selbständig ablaufen, beispielsweise unter Wirkung der Schwerkraft, beispielsweise aber auch unter Wirkung der vordringenden Kernschmelze.

Bevorzugte Ausführungsformen sind in den Unteransprüchen gekennzeichnet.

Ausführungsbeispiele der Erfindung werden im folgenden anhand der Zeichnung näher erläutert. Es zeigen:
Figur 1 eine erste Einrichtung zum Auffangen von Kernschmelze aus einem Reaktordruckbehälter mit einer aus mehreren Teilen, einschließlich einer Schmelz-Schraube als Auslöseelement, bestehenden Trennwand zwischen einer Vorkammer und einer Ausbreitungskammer;
Figur 2 eine zweite derartige Einrichtung mit einem Schmelz-Lagerbolzen als Auslöseelement;
Figur 3 eine dritte derartige Einrichtung mit einer an einem Bolzen befindlichen Schmelznaht als Auslöseelement;
Figur 4 eine vierte derartige Einrichtung mit einer Schmelzhülse und/oder Schmelznaht als Auslöseelement(e);
Figur 5 eine fünfte derartige Einrichtung, ebenfalls mit einer Schmelzhülse als Auslöseelement;
Figur 6 eine sechste derartige Einrichtung mit einer Schmelz-Spannmutter als Auslöseelement;
Figur 7 eine siebte derartige Einrichtung mit einem Zünder als Auslöseelement;
Figur 8 eine achte derartige Einrichtung mit einer dünnen Metallplatte als Auslöseelement; und
Figur 9 eine neunte derartige Einrichtung, ebenfalls mit einer dünnen Metallplatte als Auslöseelement.

Für gleiche und gleichartige Bauteile werden im folgenden dieselben Bezugszeichen verwendet.

Nach Figur 1 ist in einem Reaktorsicherheitsbehälter einer Kernreaktoranlage ein Reaktordruckbehälter 2 angeordnet. Der Reaktordruckbehälter 2 wird von einer ihn umgebenden Betonstruktur in einer Schildgrube 4 getragen. Ein Teil der Wand, die den Reaktordruckbehälter 2 umgibt, ist als Tragschild 6 eingezeichnet. Der Boden 8 der Schildgrube 4 besteht aus einer feuerfesten Schutzschicht oder insbesondere aus einem feuerfesten Betonsockel. Der Boden 8 kann auch aus einem anderen Material bestehen, zum Beispiel aus einer feuerfesten Keramik oder aus speziellen Steinen. Der Boden 8 verhindert, daß sich Kernschmelze nach unten durchfressen kann. Der Reaktordruckbehälter 2 ist im oberen Teil zylindrisch geformt; im unteren Teil besitzt er eine Kugelkalotte. Das theoretische Unfallszenar-io geht davon aus, daß diese Kugelkalotte auf- oder abreißen kann, so daß sich die im Reaktordruckbehälter 2 befindliche Kernschmelze in die Schildgrube 4 ergießt.

Der untere Teil der Schildgrube 4, in dem sich die Kugelkalotte des Reaktordruckbehälters 2 befindet, wird im folgenden als Vorkammer 10 bezeichnet. Bei einem Abreißen der Kugelkalotte würde letztere in die Vorkammer 10 hineinfallen. Damit in einem solch schweren Störfall die austretende Kernschmelze allenfalls auf ein geringes Wasservolumen trifft, sind (nicht gezeigte) Maßnahmen getroffen, damit die Vorkammer 10 unterhalb des Reaktordruckbehälters 2 nur ein kleines Volumen besitzt.

Von der Vorkammer 10, in der im Störfall die Kernschmelze zunächst auftritt, führt ein Kanal, ein Durchbruch oder eine Verbindung 12 im Tragschild 6 zu einer Ausbreitungskammer 14. Wichtig ist, daß diese Ausbreitungskammer 14 seitlich und in einigem Abstand vom Reaktordruckbehälter 2 angeordnet sowie im Normalbetrieb trockengehalten ist. Die Vorkammer 10 ist also über die Verbindung 12 mit Abflußöffnung für die Kernschmelze an die Ausbreitungskammer 14 angeschlossen. Die Verbindung 12 ist vorliegend als horizontaler Kanal eingezeichnet. Vorzugsweise ist sie aber geneigt und fällt nach links ab. Ihr Boden besteht ebenfalls aus einer feuerfesten Schutzschicht, die sich bis in die Ausbreitungskammer 14 hinein erstreckt. Bemerkenswert ist, daß der eine Ausbreitungsfläche bildende Boden 15 auf der Seite der Ausbreitungskammer 14 mit einer abfallenden Stufe 16 versehen ist.

In der Verbindung 12 befindet sich eine Schott- oder Trennwand, die insgesamt mit 18 bezeichnet ist und die von der Kernschmelze thermisch zerstört werden kann. Die Schott- oder Trennwand 18 ist also so bemessen, daß sie nach einer vorgegebenen Zeitspanne unter der Wirkung der Kernschmelze zerstört wird. Diese Zeitspanne kann beispielsweise 20 bis 30 Minuten betragen. Die Schott- oder Trennwand 18 ist aus einer ganzen Anzahl von Teilen zusammengesetzt, wie im folgenden näher ausgeführt wird. Sie soll im Versagensfall, wenn also der Reaktordruckbehälter 2 leck wird, den Restdruck aufnehmen. Dieser Restdruck kann beispielsweise 20 bar betragen. Sie soll nur solange dem Druck und der Temperatur widerstehen, bis der überwiegende Teil des Reaktorkerns sich in Form von Kernschmelze in dem unteren Teil der Reaktorgrube 4 gesammelt hat.

Die Verbindung 12 hat beispielsweise einen runden oder einen abgerundet-rechteckigen Querschnitt. Sie hat beispielsweise eine Höhe von 1m und eine Breite von 1,20 m. Der dadurch gebildete Kanal hat also einen relativ großen Querschnitt, um ein leichtes Ablaufen der Kernschmelze nach dem Öffnen der Trennwand 18 zu ermöglichen. Ein abschüssiger Verlauf der Verbindung 12 ist bevorzugt, damit ein weitgehend restfreies Auslaufen der Kernschmelze von der Vorkammer 10 in die Ausbreitungskammer 14 gewährleistet ist. Die Kernschmelze folgt hierbei der Schwerkraft. Die Fläche der Ausbreitungskammer 14 beträgt zum Beispiel 150 m². Bevorzugt ist durch (nicht näher dargestellte) Maßnahmen sichergestellt, daß Kühlwasser in die Ausbreitungskammer 14 erst dann einströmen kann, wenn die Kernschmelze in diese bereits eingedrungen ist. Dieser Vorgang wird als "trockene Ausbreitung" bezeichnet. Allerdings muß betont werden, daß die Trennwand 18 hier so konzipiert ist, daß sie bei Austritt von Kernschmelze auch dann sicher öffnet, wenn - infolge eines Störfalls - Wasser in die Ausbreitungskammer 14 gelangt ist und damit eigentlich die Gefahr bestehen könnte, daß es zu einer Kühlung und Außerbetriebsetzung der Durchschmelzeigenschaft der Trennwand 18 kommen könnte.

Der obere Teil der Verbindung 12 ist mit einer feuerfesten Ausmauerung oder Schutzschicht 20 ausgekleidet, die beidseits des Tragschilds 6 übersteht. Auch die Seiten können mit einer solchen Schutzschicht 20 ausgekleidet sein. Dabei handelt es sich insbesondere um hochtemperaturfeste Steine. Infolge der angegebenen Wahl des fast runden oder fast quadratischen Querschnitts ist sichergestellt, daß die Konstruktion selbsttragend ist. Wie aus der Seitenansicht nach Figur la hervorgeht, ist der Eingang des (verbleibenden) Verbindungskanals oder Schachts 28 durch einen Verstärkungsrahmen 22, der beispielsweise aus Metall besteht, abgedeckt. Dieser ist hier hufeisenförmig ausgebildet.

Ein entsprechender Verstärkungsrahmen oder Dichtflansch 24 ist auf der anderen Stirnseite der Ausmauerung 20 angebracht. Dieser Dichtflansch 24 ist hier O-förmig ausgebildet. Diese O-förmige Ausbildung ist infolge der Stufe 16 möglich. Dies ist in der Seitenansicht nach Figur 1b gezeigt.

Innerhalb der Ausmauerung 20 befindet sich eine Auskleidung 26 aus einem Metall, so daß sich der Schacht 28 ergibt. Der Schacht 28 kann die genannten Abmessungen besitzen. Im mittleren Teil dieses Schachts 28 befindet sich eine Serpentin-Granulat-Büchse 30. Diese Büchse 30 kann aus Strahlenschutzgründen vorgesehen sein. Sie dient dazu, Inspektionspersonal, das die Ausbreitungskammer 14 betreten hat, vor Strahlung aus der Schildgrube 4 zu schützen. Die Büchse 30 besitzt eine zentrale Längsbohrung 32. Durch die Längsbohrung 32 ist eine Zugstange 34 mit beidseitig angebrachten stirnseitigen Gewindebohrungen hindurchgeführt.

Innerhalb der Ausbreitungskammer 14 befindet sich ein aufrecht angeordneter runder Dichtdeckel 36 mit einer ringförmigen Dichtfläche 35, die auf dem Dichtflansch 24 anliegt. Dieser Dichtdeckel 36 wird mit Hilfe der Zugstange 34 und eines auf der anderen Seite befindlichen Gegenlagers 38 in der gezeigten Position festgehalten. Bevorzugt ist der Dichtdeckel 36 als Schwimmkörper ausgebildet. Dazu umfaßt er eine Anzahl parallel zueinander angeordneter dünnwandiger Rohrstücke 37a, die in einer metallischen Kapsel oder in einem Blechgehäuse 37b untergebracht sind. Der Dichtdeckel 36 ist mit Hilfe einer Montageschraube 40 samt Dichtung in der linken stirnseitigen Gewindebohrung der Zugstange 34 festgehalten.

Das Gegenlager 38 kann insbesondere spinnenförmig ausgebildet sein. Vorliegend umfaßt es, wie insbesondere aus Figur 1a deutlich wird, ein Dreibein 42, das sich mit seinen Füßen 44 auf dem Verstärkungsrahmen 22 abstützt. Zur Befestigung ist eine zentral angeordnete Schmelz-Schraube 46 aus einem thermisch leicht zerstörbaren Material vorgesehen. Diese Schmelz-Schraube 46 ist durch die Nabe des Dreibeins 42 hindurchgeführt und in der rechten endseitigen Gewindebohrung der Zugstange 34 verschraubt. Die Schmelz-Schraube 46 stellt dabei ein thermisches Auslöseelement oder Auslöseteil dar. Sie wird durch die in die Vorkammer 10 eindringende Kernschmelze thermisch zerstört, woraufhin die weiteren Teile der Trennwand 18 auseinanderfallen und den Weg für den Fluß der Kernschmelze freigeben. Dies soll im folgenden noch etwas näher verdeutlicht werden.

Die sich ausbreitende Kernschmelze schmilzt also die Schmelz-Schraube 46 im Dreibein 42 des Gegenlagers 38 auf. Der als Schwimmkörper konzipierte Dichtdeckel 36 wird - sofern im Ausbreitungsraum 14 Wasser stehen sollte - nur noch vom anstehenden Wasserdruck und der bevorzugt ebenfalls aus Schmelzmaterial bestehenden Zugstange 34 in seiner Lage gehalten. Die nach links voreilende Kernschmelze schmilzt den unteren Teil der Serpentin-Granulat-Büchse 30 und die darin geführte Zugstange 34 auf. Der obere Teil der Serpentin-Granulat-Büchse 30 schwimmt nun auf. Die weiter nach links vorrückende Kernschmelze drückt sodann den Dichtdeckel 36 auf und breitet sich auf der links gelegenen, außerhalb des Tragschildes 6 befindlichen Ausbreitungsfläche des Bodens 15 der Ausbreitungskammer 14 aus. Gegebenenfalls kann durch weitere Maßnahmen nunmehr veranlaßt werden, daß Wasser in die Ausbreitungskammer 14 einströmt.

Die in Figur 1 dargestellte Einrichtung kann somit angesehen werden als eine Rückhalteeinrichtung für Kernschmelze mit einer aufschmelzbaren Dicntungswand 18 für die Austrittsöffnung des Tragschildkanals 28.

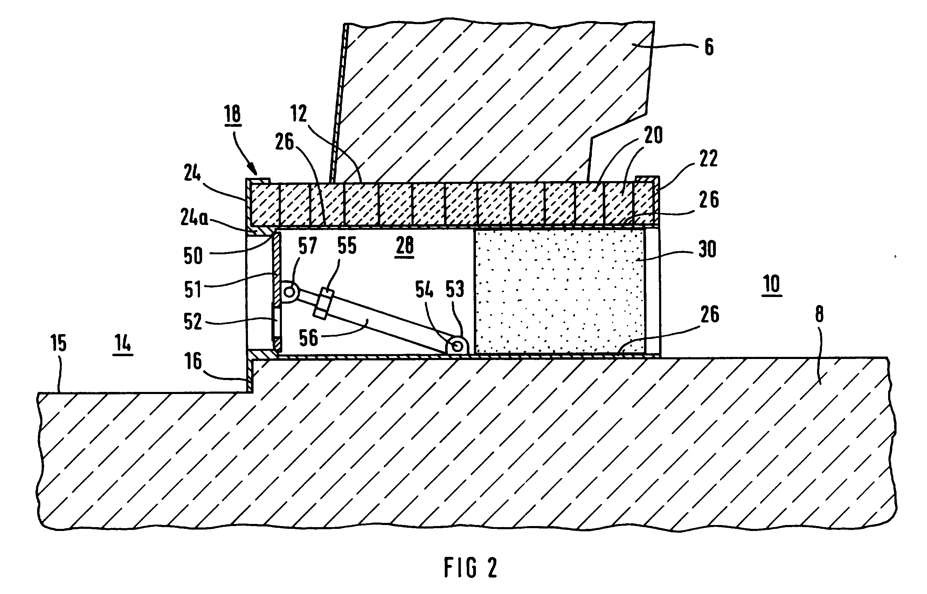

Bei der Einrichtung nach Figur 2 entspricht der konstruktive Aufbau von Tragschild 6, Vorkammer 10, Verbindung 12 und Ausbreitungskammer 14 weitgehend demjenigen von Figur 1. Auch hier ist ein durch eine Metallauskleidung 26 ausgekleideter Schacht 28 vorhanden, in dem sich eine Serpentin-Granulat-Büchse 30 - allerdings am rechten Ende - befindet. In Figur 2 ist ein Teilstück 24a des Dichtflanschs 24 nach innen in den Schacht 28 eingezogen, wo das Ende eine konische Dichtfläche 50 bildet. An diese Dichtfläche 50 wird von innen ein runder Dichtdeckel 51 gedrückt. Dieser Dichtdeckel 51 ist außerhalb seiner Mitte mit einer Betätigungsöffnung 52 versehen.

Etwa in der Mitte des Kanals oder Schachts 28 ist quer zur Längsrichtung im Bodenbereich ein Schmelz-Lagerbolzen 54 aus einem relativ leicht schmelzenden Material angebracht mit Hilfe von zwei Augen 53, die an der Auskleidung 26 verschweißt sind. Der Schmelz-Lagerbolzen 54 ist über ein von einem Betätigungsglied 55 spannbare Druckstange 56 mit einem Gelenk 57 auf der Innenseite des Dichtdeckels 51 verbunden. Das Betätigungsglied 55 kann insbesondere eine Betätigungsmutter sein. Sie dient zum Spannen und Entspannen der Druckstange 56. Im Spannungsfall liegt der Deckel 51 mit seinem Rand dichtend an der Dichtfläche 50 im Bereich der Verbindung 12 von der Vorkammer 10 zur Ausbreitungskammer 14 an. Der Schmelz-Lagerbolzen 54 zwischen den beiden Augen 53 dient dabei als Gegenlager. Das Betätigungsglied 55 kann von der Ausbreitungskammer 14 aus über die Öffnung 52 bedient werden.

Im Versagensfall schmilzt die sich ausbreitende Kernschmelze den unteren Teil der Serpentin-Granulat-Büchse 30 auf, während der obere Teil aufschwimmt. Die Dichtheit zwischen dem Dichtflansch 24 und dem Dichtdeckel 51 wird über das Spannen der Druckstange 56 gegen das Widerlager mit dem Schmelz-Lagerbolzen 54 erreicht. Bei Erreichen der Schmelztemperatur des Schmelz-Lagerbolzens 54 durch die anstehende Kernschmelze wird die Wirkung des Widerlagers aufgehoben, und die Druckstange 56 wird durch den am Dichtdeckel 51 gegebenenfalls wirkenden Wasserdruck in die Kernschmelze geschoben. Gleichzeitig wird die Dichtheit aufgehoben, und das gegebenenfalls vorhandene Wasser kann zur Kühlung der Kernschmelze in den Schacht 28 einströmen. Das innenseitige Ende des Dichtflansches 24 sowie die Auskleidung 26 dienen als Führungen, die ein Verkanten des Dichtdeckels 51 verhindern. Die Kernschmelze kriecht unter dem gegebenfalls einströmenden Wasser über den umgekippten Dichtdeckel 51 auf die außerhalb des Tragschildes 6 befindliche Ausbreitungsfläche 15. Ein Umkippen des Deckels erfolgt auch dann, wenn außerhalb des Schachts 28, also in der Ausbreitungskammer 14, kein Wasser vorhanden ist.

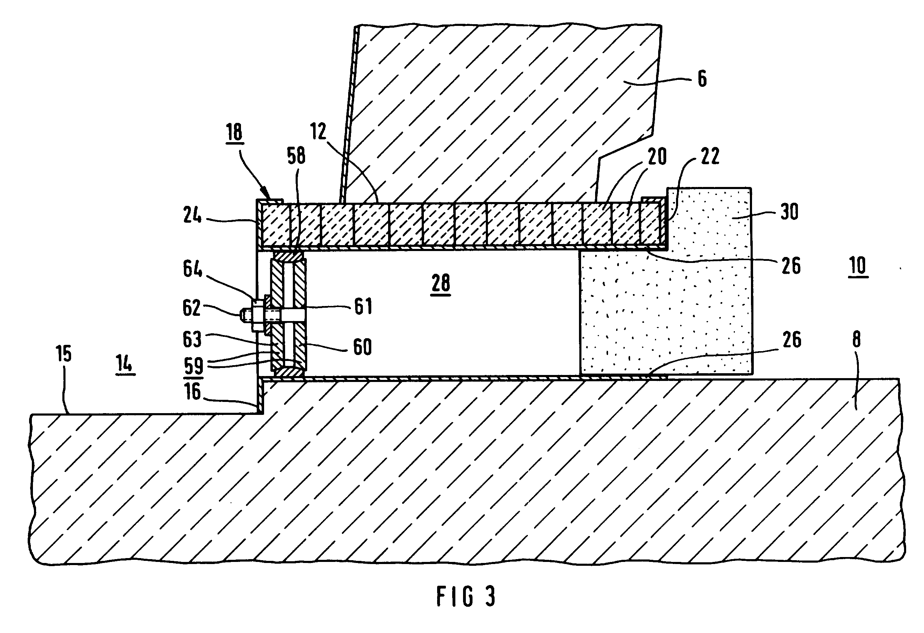

In Figur 3 ist ein drittes Ausführungsbeispiel dargestellt. Der Tragschild 6 enthält auch hier wiederum einen Kanal oder einen Schacht 28, der abgedichtet ist. Im vorliegenden Fall ragt die Serpentin-Granulat-Büchse 30 etwas aus dem rechten Ende des Schachts 28 hinaus. Die eigentliche Abdichtung wird mit einem etwa ringförmigen Dichtkörper 58 und einem Spannkörper 59 bewirkt. Der Dichtkörper 58 liegt am linken Ende des Schachts 28 an der Innenfläche an. Der Spannkörper 59 umfaßt einen ersten Deckel 60, in dessen Mitte mittels einer Schweißnaht 61 ein nach links weisender Schraubbolzen 62 eingeschweißt ist. Die Schweißnaht 61 ist eine Schmelznaht, besteht also aus einem relativ leicht schmelzenden Material. Der Bolzen 62 ist zentral durch einen zweiten Deckel 63 geführt, dessen Rand ebenfalls auf dem Dichtkörper 58 aufliegt. Der Dichtkörper 58 besteht entweder aus einem weichen Metall oder einem harten Gummi. Bevorzugt hat er ein leicht konisches Profil, so daß sich bei Anziehen einer Montagemutter 64, die außerdem noch eine Dichtung aufweisen kann, ein komplikationsloses Einspannen ergibt. Zu diesem Zweck können die Ränder der beiden Deckel 60, 63 nach innen auch abgeschrägt sein. Nach dem Anziehen der Montagemutter 64 stützen sich die Ränder der Deckel 60, 63 gegen den Dichtkörper 58 ab. Dadurch liegt der Spannkörper 59 dichtend im Schacht 28. Die beiden Deckel 60, 63 bestehen bevorzugt aus einem Metall wie Stahl.

Im vorliegenden Fall ist das Auslöseelement die Schmelznaht 61.

Im Versagensfall schmilzt die sich in der Vorkammer 10 ausbreitende Kernschmelze den unteren Teil der Serpentin-Granulat-Büchse 30 auf. Der obere Teil schwimmt oben auf. Die Dichtheit zwischen dem Spannkörper 59 und dem Dichtkörper 58 wurde über das Spannen der Montagemutter 64 auf dem Bolzen 62 des Spannkörpers 59 erreicht. Bei Erreichen der Schmelztemperatur an der Schmelznaht 61 durch die anstehende Kernschmelze wird der Spannkörper 59 in zwei Teile zerlegt, nämlich in den inneren Deckel 60 einerseits und den äußeren Deckel 63 andererseits. Zunächst wird der innere Deckel 60 aufgeschmolzen, oder er fällt in die Kernschmelze. Anschließend schiebt die Kernschmelze den äußeren Deckel 63 gegen den gegebenenfalls wirkenden Wasserdruck auf, wodurch dieser - infolge des Wasserdrucks - in die Kernschmelze fällt. Führungen verhindern auch hier wieder ein eventuelles Verkanten der Deckel 60,63. Die Kernschmelze kriecht nun unter dem gegebenenfalls einströmenden Wasser auf die außerhalb des Tragschildes 6 befindliche Ausbreitungsflache 15.

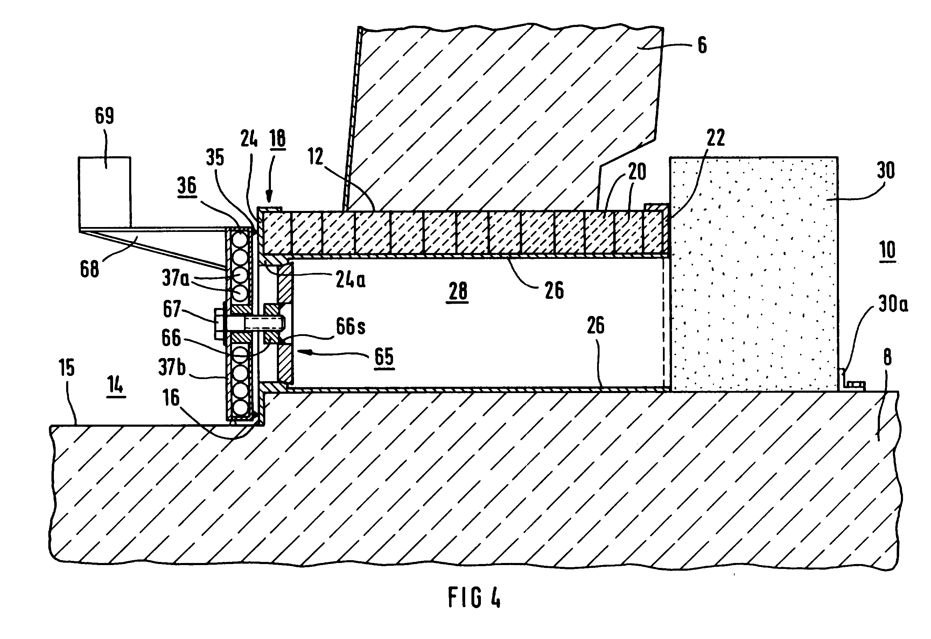

Bei der Ausführungsform nach Figur 4 ist ein anderer Verschluß des Schachts 28 als Trennwand 18 gewählt. Auch dieser Verschluß kann mit Hilfe eines thermisch zerstörbaren Elements oder Teiles beseitigt werden. Nach Figur 4 umfaßt die Trennwand 18 einen Schließdeckel 65, der mit einer Schraubhülse 66 verbunden ist oder diese beinhaltet. Der Schließdeckel 65 ist mittels der Hülse 66 dichtend in den Schacht 28 einspannbar. Entweder ist die Hülse 66 als Schmelzhülse oder aber die Verbindung ist als thermisch leicht zerstörbare Schweißnaht oder Schmelzverbindung 66s ausgeführt. Auch eine Kombination beider Maßnahmen ist möglich. Vorzugsweise ist für die Abdichtung eine konische Führung des Randes des Schließdeckels 65 vorgesehen. Dieser Rand stützt sich dabei auf den nach innen gezogenen Teil 24a des Dichtflanschs 24. Dieser Rand stellt somit eine ringförmige Dichtung dar. Vorliegend ist bevorzugt der zentral gelegene Teil des Schließdeckels 65 als Schmelzhülse 66 ausgebildet.

Die Trennwand 18 besitzt neben dem inneren Deckel oder Schließdeckel 65 samt Hülse 66 auch einen zusätzlichen Deckel 36, wie er bereits bei Figur 1 erläutert wurde. Dieser zusätzliche Deckel 36 ist mittels einer Montageschraube 67 samt Dichtung von außen an der Hülse 66 verschraubt. Am oberen Teil ist der Deckel 36 über einen Ausleger 68 mit einem Gewicht 69 versehen. Ein Dichtungsring 35 des Deckels 36 liegt auch hier wieder auf dem Dichtflansch 24 auf. Wie bei den Ausführungsformen nach den Figuren 1 bis 3 ist auch hier die Anordnung so getroffen, daß keine Kräfte von der Dichtwand 18 auf den Baukörper übertragen werden.

Im vorliegenden Fall ist die Serpentin-Granulat-Büchse 30 mittels eines Bodenhalters 30a ganz außerhalb des Schachts 28 im Vorraum 10 untergebracht.

Im Falle eines Versagens hebt die sich ausbreitende Kernschmelze die Serpentin-Granulat-Büchse 30 an, so daß diese aufschwimmt. Die Kernschmelze fließt sodann in die Austrittsöffnung am Eingang des Schachts 28 ein. Die Dichtung ist als Dicht- und Stützlager konzipiert. Das Gegenlager 65, 66 ist vorliegend über dem erwähnten Konus auf den Dichtflansch 24 gezogen. Im Gegenlager 65, 66 ist die Schmelzhülse 66 oder die Schmelznaht 66s integriert, die bei Überschreitung ihrer Schmelztemperatur durch die anstehende Kernschmelze aus dem Gegenlager 65, 66 herausgelöst wird. Dadurch wird die Befestigung, das heißt die Montageschraube 67, vom Dichtdeckel 36 aufgehoben. Das am Dichtdeckel 36 befestigte Gegengewicht 69 sorgt dafür, daß der Dichtdeckel 36 umkippt und die Austrittsöffnung, gegebenenfalls gegen den Druck des in der Ausbreitungskammer 14 befindlichen Wassers, freigibt.

Durch den in diesem Fall auf das Gegenlager 65, 66 wirkenden Wasserdruck kippt das Gegenlager auf die Kernschmelze. Führungen verhindern auch hier wieder ein eventuelles Verkanten des Gegenlagers 65, 66. Die Stärke des Gegenlagers 65,66 ist so bemessen, daß selbst bei Kontakt mit der Kernschmelze zuerst die Schmelzhülse 66 auf- oder herausgelöst wird, bevor der Schließdeckel 65 durchgeschmolzen ist. Die Kernschmelze kriecht nun unter dem einströmenden Wasser über den oder neben dem umgekippten Dichtdeckel 36 auf die außerhalb des Tragschilds 6 befindliche Ausbreitungsfläche 15.

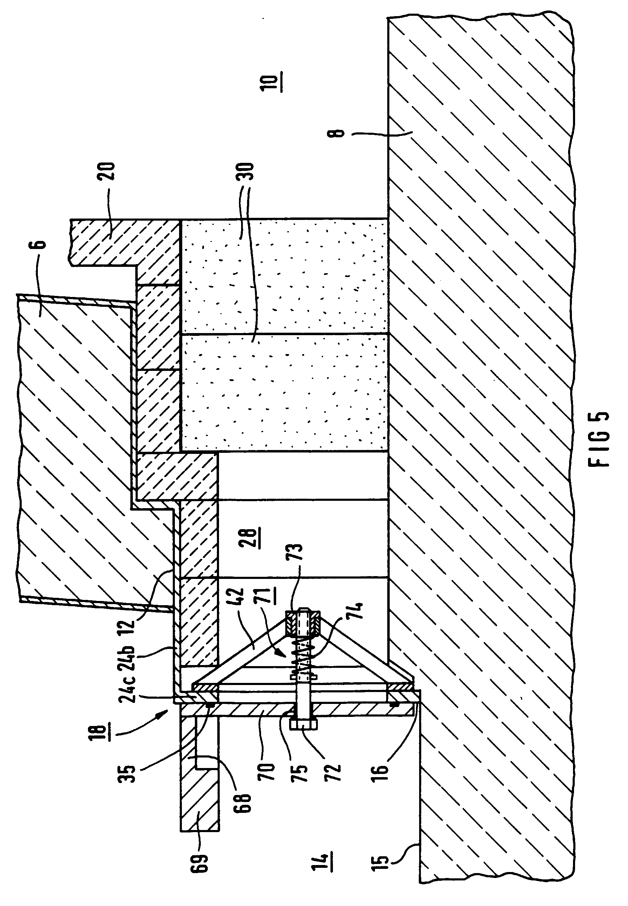

In Figur 5 ist eine Ausführungsform dargestellt, bei der ein Dichtflansch oder Auskleidungsrahmen 24c an einer Auskleidung 24b in der Verbindung 12 angeordnet ist. Dieser Auskleidungsrahmen 24c dient vorliegend zum flüssigkeitsdichten Abschluß des Schachts 28. Die Trennwand 18 besteht hier aus einem Deckel 70, einem Gegenlager 71 und einem Verbindungselement 72 einschließlich eines Schmelzbauteils 73. Das Verbindungselement 72 verbindet den Deckel 70 mit dem Gegenlager 71. Die Verbindung ist so ausgeführt, daß sich der Deckel 70 von außen dichtend gegen den Dichhtflansch 24c und daß sich das Gegenlager 71 von innen ebenfalls gegen den Dichtflansch 24c abstützt. Der Deckel 70 ist bevorzugt eine runde Metallplatte, in die im Bereich des Dichtflanschs 24c ein Dichtring 35 eingelassen ist. Das Gegenlager 71 umfaßt vorliegend ein Dreibein 42, wie es bereits in Figur 1 dargestellt wurde. In der Nabe dieses Dreibeins 42 ist als Schmelzbauteil 73 eine Schmelzhülse mit Innengewinde befestigt. Das Verbindungselement 72 besitzt einen zentral angeordneten Bolzen, der mit der Schmelzhülse verschraubt ist. Damit bei Inspektionsarbeiten die Schmelzhülse 73 nicht aus ihrer Lage geschoben wird, ist auf dem Bolzen eine Spiralfeder 74 vorgesehen, die sich gegen einen Bolzenkragen abstützt. Zur Abdichtung des Bolzens des Verbindungselements 72 gegenüber dem Deckel 70 kann eine Kupfer-Dichtung 75 verwendet werden. Auch hier ist der Deckel 70 wieder mit einem Ausleger 68 versehen, an dem ein Gewicht 69 angebracht ist. Die Serpentin-Granulat-Büchse 30 ist in einem besonderen Teilraum des Schachts 28 auf der rechten Seite angeordnet. Dieser Schacht 28 ist im oberen Bereich sowie an den beiden Seiten mit einer Ausmauerung 20 versehen.

Zur Ausführungsform nach Figur 5 läßt sich also feststellen: Die Austrittsöffnung auf der Seite des Ausbreitungsraumes 14 weist kanalseitig ein am Rand der Öffnung sich abstützendes Dreibein 42 auf, das in seinem Zentrum mit einer Schmelzhülse als Schmelzbauteil 73 versehen ist. In diese Schmelzhülse ist eine vorzugsweise federbelastete Spannschraube oder ein Bolzen eingeschraubt, die/der den Dichtungsdeckel 70 mit dem Dichtungsring 35 gegen den Dichtflansch 24c der Austrittsöffnung zieht.

Wenn die Kernschmelze die Serpentin-Granulat-Doppel-Büchse 30 durchschmolzen hat, erreicht sie die Schmelzhülse 73. Dadurch schmilzt das Widerlager für den Bolzen im Verbindungselement 72 weg, und der Deckel 70 fällt ab. Damit kann sich die Kernschmelze in den Ausbreitungsraum 14 ergießen.

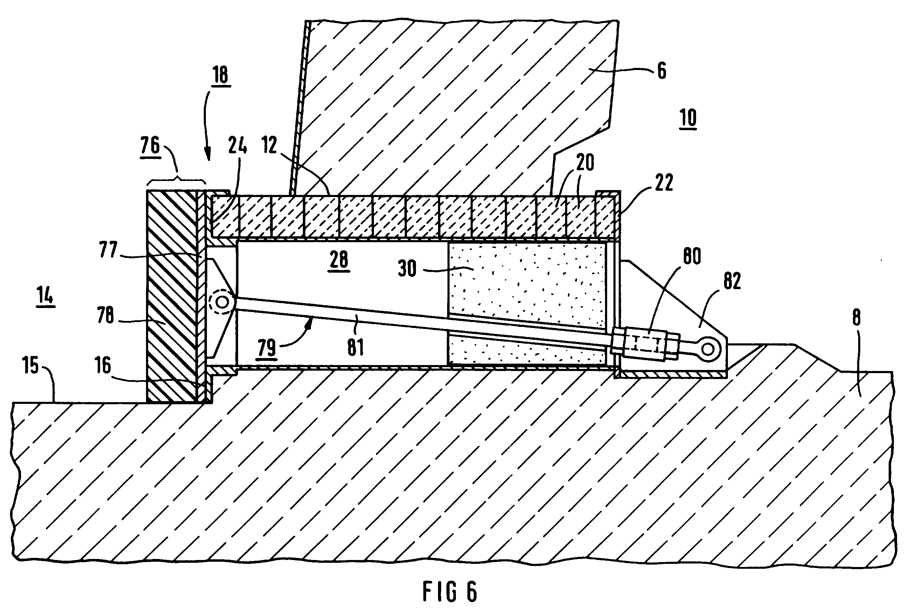

Bei der Ausführungsform nach Figur 6 ist wiederum ein an der Verbindung 12 angeordneter Rahmen 24 vorgesehen. Dieser kann U- oder L-Profil besitzen. Weiterhin ist auch hier im Ausbreitungsraum 14 ein Deckel 76 vorgesehen, der speziell als Schmelz-Dichtdeckel ausgeführt ist. Er besitzt dazu eine innengelegene runde Metallplatte 77, die außen mit einer Isolierung 78, beispielsweise aus einem Material wie ein hochfester Kunststoff, versehen ist. Die Platte 77 des Deckels 76 wird mit Hilfe eines Spannbauteils 79, das auch ein Schmelzbauteil 80 umfaßt, dichtend an den Rahmen 24 gepreßt.

Das Spannbauteil 79 besitzt eine Zugstange oder einen Zuganker 81, und das Schmelzbauteil 80 ist vorliegend eine auf die Zugstange 81 aufschraubbare Schmelz-Spannmutter. Die Zugstange 81 ist dabei schräg im Schacht 28 angeordnet. Sie ist einerseits in einem Lager am Deckel 76 gelagert; und die Schmelz-Spannmutter ist andererseits in einem Lager im Bereich des Bodens über die Schmelz-Spannmutter 80 gegengelagert. Als Gegenlager ist dabei eine Konsole 82 vorgesehen, die am Verstärkungsrahmen 22 im Bereich der Vorkammer 10 befestigt ist. Die Zugstange 81 führt dabei schräg durch die Serpentin-Granulat-Büchse 30.

Es ist also bezüglich Figur 6 festzuhalten: Über die Zugstange 81 wird der Schmelz-Dichtdeckel 76 gegen den Dichtflansch 24 der Austrittsöffnung gezogen. Die Zugstange 81 hat dabei eine Schmelz-Spannmutter 80, die auf der der Vorratskammer 10 zugewandten Seite des Austrittskanals oder Schachts 28 angeordnet ist. Diese Schmelz-Spannmutter 80 wird, wenn sie mit der Kernschmelze in Berührung kommt, aufgeschmolzen. Die Spannung geht verloren, und der Schmelz-Dichtdeckel 76 kann sich öffnen. Die Kernschmelze kann dann entweder in die trockene Ausbreitungskammer 14 oder aber - bei einem sogenannten nassen Konzept - in das Wasserbad übertreten.

Von Bedeutung ist, daß der Schmelz-Dichtdeckel 76 auf seiner Außenseite die Isolierung 78 trägt. Falls sich im Ausbreitungsraum 14 Wasser befindet, was konzeptionell bedingt oder durch einen Unfall verursacht sein kann, so wird der Schmelz-Dichtdeckel 76 durch dieses Wasser nicht gekühlt, so daß ein sicheres Durchschmelzen der Metallplatte 77 gewährleistet ist.

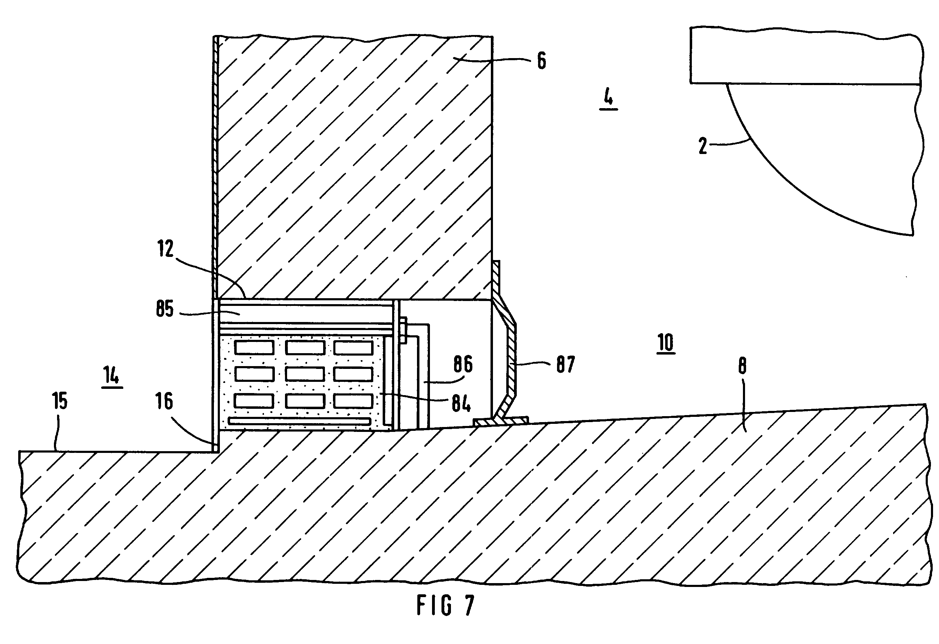

Bei der in Figur 7 dargestellten Ausführungsform ist in der - hier schrägen - Verbindung 12 zwischen der Vorkammer 10 und der Ausbreitungskammer 14 ein chemisches Reaktionsmittel 84 sowie ein Füllmaterial 85 dichtend angeordnet. Weiterhin ist im reaktordruckbehälterseitigen Teil der Verbindung 12 ein Zünder 86 für das Reaktionsmittel 84 untergebracht. Dieser Zünder 86 kann bevorzugt teilweise auch oberhalb des Reaktionsmittels 84 angeordnet sein. Als chemisches Reaktionsmittel 84 wird vorliegend bevorzugt Thermit verwendet. Und als Füllmaterial 85 kann Beton vorgesehen sein. Die Verwendung von Thermit und eines zumindest teilweise darauf angeordneten Zünders 86 hat zur Folge, daß das chemische Reaktionsmittel 84 von oben abbrennt und zunächst oben einen gewissen Durchtrittsraum für die Kernschmelze freigibt. Im vorderen Teil der Verbindung 12 ist ein Deckel 87, insbesondere aus Metall bestehend, dichtend angeordnet.

Die in Figur 7 gezeigte Ausführungsform ist sowohl für eine nasse als auch für eine trockene Ausbreitungskammer 14 geeignet, wobei der letzteren der Vorzug gegeben wird. Der durch den Tragschild 6 hindurchgeführte Austrittskanal 12 ist auf der Seite des Reaktordruckbehälters 2 mittels des Deckels 87 gegen Druckwellen aus der Reaktorgrube 4 abgedichtet. Wenn der Deckel 87 durch die Kernschmelze durchgeschmolzen ist, erreicht diese den Zünder 86. Die Zündung des Thermits 84 bringt dann eine Schmelzstelle, die insbesondere als Gitterwerk ausgebildet sein kann, zum Schmelzen. Dadurch wird die Verbindung 12 zum Durchlaß der Kernschmelze freigegeben. Diese kann sich sodann in die Ausbreitungskammer 14 ergießen. Im Falle einer nassen Lösung, wenn also der Ausbreitungsraum 14 mit Wasser gefüllt ist, wird die hier gelegene Dichtungsstelle mittels einer Leckage-Überwachungs-Einrichtung kontrolliert, um ein Einsickern von Wasser in die Vorkammer 10 erfassen zu können.

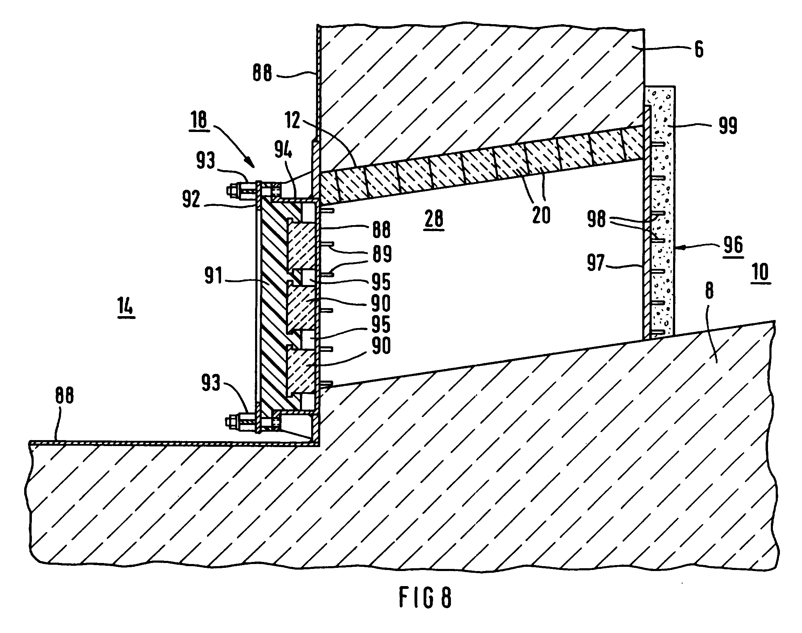

Bei der Ausführungsform nach Figur 8 wird die Trennwand 18 im wesentlichen gebildet durch eine wärmeisolierte dünne Metallplatte 88, die die Verbindung 12 verschließt. Diese Metallplatte 88 kann insbesondere aus Stahl bestehen. Es kann sich dabei um eine Auskleidung oder einen metallischen Liner handeln, der ohnehin zur Auskleidung des Raums 14 vorgesehen ist. Die Metallplatte 88 ist im Bereich der Öffnung des Schachts 28 mit Versteifungsrippen 89 versehen. Dadurch sollen Durchwölbungen, zum Beispiel infolge eines Wassereinbruchs auf der Seite der Ausbreitungskammer 14, verhindert werden. Die Metallplatte 88 wirkt somit als abdichtende Schottwand.

An ihrer Außenseite sitzen Abstandsstücke 90, die insbesondere aus einer Keramik bestehen können. Sie können beispielsweise eine zylindrische Kontur aufweisen. Die Abstandsstücke 90 sind alle von einem runden Isolierkörper 91, der vorzugsweise aus elastischem Gummi bestehen kann, abgedeckt. Dieser Isolierkörper 91 hat einen überstehenden Rand. Auf diesem liegt außen ein Flansch- oder Befestigungsring 92 auf. Der Isolierkörper 91 wird durch diesen Flanschring 92 in Position und unter Vorspannung gehalten. Der Flanschring 92 ist mittels Spannschrauben 93 an einem ringförmigen Vorsprung oder Gegenflansch 94, der auf der Metallplatte 88 befestigt ist, verspannt. Die Befestigungsmittel 92, 93, 94 halten den Isolierkörper 91 im Abstand vor der Metallplatte 88 fest. Der Abstand ist dabei durch die nebeneinander liegenden Abstandsstücke 90 festgelegt. Von Bedeutung ist, daß eventuell sich in der Ausbreitungskammer 14 befindliches Wasser nicht zu einer Kühlung der Metallplatte 88 derart führen kann, daß dieser Metallplatte 88 nicht durchschmelzen kann. Die aus Figur 8 ersichtlichen Hohlräume 95 tragen zur thermischen Isolierung bei. Somit ist sichergestellt, daß der Isolierkörper 91 erst dann schmilzt, wenn bereits die dünne Metallplatte 88 geschmolzen ist.

Aus Figur 8 ist weiter ersichtlich, daß der Schacht oder Ausbreitungskanal 28 in Richtung zur Ausbreitungskammer 14 geneigt ist. Auf der Seite der Vorkammer 10 ist eine leicht schmelzende Wand 96 vorgesehen. Diese besteht bevorzugt aus einer Stahlplatte 97, die mit Rippen 98 bestückt ist. Außen trägt die Stahlplatte 97 eine Verkleidung 99 aus silikatischem Beton. Diese Wand 96 dichtet die Eintrittsöffnung in den Schacht 28 ab. Sie dient zum Auffangen des Druckes, zum Beispiel von 20 bar, bei Versagen des Reaktordruckbehälters 2.

Wenn die Kernschmelze die leicht schmelzende, abdichtende Wand 96 erreicht, wird nach Durchschmelzen der Schutzschicht 99 aus silikatischem Beton auch die mit Rippen 98 versehene Stahlplatte 97 durchgeschmolzen. Die Kernschmelze erreicht nun durch den geneigten Schacht oder Austrittskanal 28 die gegenüberliegende Metallplatte 88 mit den Versteifungsrippen 89. Sie schmilzt diese durch, und anschließend wird der Isolierkörper 91 aufgeschmolzen. Dadurch öffnet sich die Flanschdichtung. Die als Isolator wirkenden Keramik-Abstandsstücke 90 vermeiden während des Aufschmelzens der Metallplatte 88 das vorzeitige Versagen des Isolierkörpers 91. Denn es ist als wichtig erkannt worden, daß die Metallplatte 88 nicht durch eventuell in der Ausbreitungskammer 14 befindliches Wasser gekühlt werden darf. Die Abstandsstücke 90 und die in den dazwischenliegenden Hohlräumen 95 befindlichen Luftpolster haben eine gute isolierende Wirkung, so daß die angesprochene Rückwärtskühlung ausgeschlossen ist.

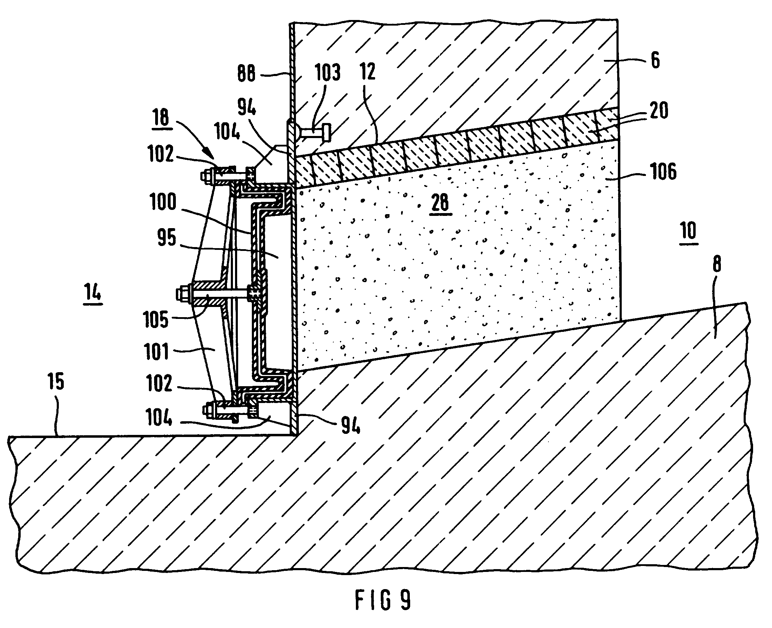

Bei der Ausführungsform nach Figur 9 ist die Trennwand 18 gebildet durch eine dünne Metallplatte 88, die wiederum insbesondere als metallische Auskleidung oder als Liner bereits vorhanden sein kann. Diese Metallplatte 88 ist so angeordnet, daß sie die Verbindung 12 auf der Seite der Ausbreitungskammer 14 verschließt. Die Trennwand 18 besitzt weiter einen hohlen Isolierkörper 100, der vorliegend bevorzugt topfförmig ausgebildet ist. Er besitzt einen Befestigungsrand. Weiter ist ein im folgenden näher erläutertes Befestigungsmittel vorgesehen, das den Isolierkörper 100 vor der Metallplatte 88 festhält. Wichtig ist, daß der Isolierkörper 100 entweder einen Hohlraum 95, insbesondere eine Luftkammer, bereits enthält oder zusammen beim Anpressen an die Metallplatte 88 bildet. Vorliegend ist die zweitgenannte Möglichkeit gewählt. Die Luftkammer dient hier zur thermischen Isolierung. Auch der Isolierkörper 100 hat isolierende Eigenschaften. Er besteht bevorzugt aus einem armierten Gummi.

Das genannte Befestigungsmittel umfaßt einen Versteifungskörper 101, der vorliegend als ein Dreibein ausgebildet ist. Das Dreibein ist mit seinen Beinen mit Hilfe von Schraubbolzen 102 unter Zwischenlage des Randes des Isolierkörpers 100 an der Metallplatte 88 verschraubt. Der Isolierkörper 100 liegt dabei dichtend an der Metallplatte 88 an. Zur Befestigung dienen Flansche 94, die über Betonanker 103 am Tragschild 6 befestigt sind. Das Befestigungsmittel umfaßt auch Versteifungsbleche 104, die auf dem Flansch 94 angeordnet sind.

Das Zentrum des Dreibeins 101 kann durch einen Schraubbolzen 105 mit dem Zentrum des topfförmigen Isolierkörpers 100 verbunden sein. Dadurch ist gewährleistet, daß der Druck des eventuell in der Ausbreitungskammer 14 befindlichen Wassers nicht die Luftkammer 95 soweit zusammendrücken kann, daß sie thermisch unwirksam wird.

Im Schacht 28 ist ein leicht schmelzender Stopfen 106 angeordnet. Dieser kann beispielsweise aus einem silikatischen Beton bestehen.

Bei der Ausführungsform nach Figur 9 ist also folgendes festzuhalten: Der in Richtung Ausbreitungskammer 14 geneigte Austrittskanal oder Schacht 28 ist zur Übertragung des Druckes auf der Seite der Schildgrube 4 mit dem Stopfen 106 aus dem leicht schmelzenden Material ausgefüllt. Auf der Seite der Ausbreitungskammer 14 ist die Metallplatte 88, bevorzugt ein Stahlblech, als abdichtende Schottwand installiert. An ihrer Außenseite wird mit dem Versteifungskörper 101 der Isolierkörper 100 zentrisch zur Erzeugung der Luftkammer 95 gehalten. Der Isolierkörper 100 wird am Umfang gegen den Flansch 94 abgedichtet.

Nach Durchschmelzen des leicht schmelzenden Stopfens 106 erreicht die Kernschmelze die dünne Metallplatte 88, die aufgrund des isolierend wirkenden Luftpolsters 95 nicht gekühlt wird und daher aufschmilzt. Somit ist sichergestellt, daß der Isolierkörper 100 nicht vorzeitig versagt. Anschließend wird der Isolierkörper 100 geöffnet, und die Kernschmelze fließt in die Ausbreitungskammer 14 hinein.

## Patentansprüche

1. Einrichtung zum Auffangen von Kernschmelze aus einem Reaktordruckbehälter (2)
a) mit einer unterhalb des Reaktordruckbehälters (2) angeordneten Vorkammer (10),
b) mit einer Ausbreitungskammer (14) mit einem Boden (15), welcher eine Ausbreitungsfläche für die Kernschmelze bildet,
c) mit einer die Vorkammer (10) mit der Ausbreitungskammer (14) verbindenden Verbindung (12)
und
d) mit einer zwischen der Vorkammer (10) und der Ausbreitungskammer (14) angeordneten die Verbindung (12) verschließenden Trennwand (18), die von der Kernschmelze zerstörbar ist,
**dadurch gekennzeichnet,** daß die Trennwand (18) aus mehreren Teilen besteht, wovon mindestens ein Teil (46,54,61,66) durch die Kernschmelze thermisch zerstörbar ist, wobei dieses Teil mit anderen Teilen der Trennwand (18) derart verbunden ist, daß bei Zerstörung des genannten einen Teils (46,54,61,66) ein Strömungsweg für die Kernschmelze von der Vorkammer (10) in die Ausbreitungskammer (14) freigegeben wird.

2. Einrichtung nach Anspruch 1, **dadurch gekennzeichnet,** daß die Trennwand (18) einen Deckel (36) und eine Schmelz-Schraube (46) umfaßt, wobei der Deckel (36) mit Hilfe der Schmelz-Schraube (46) dichtend in der Verbindung (12) von der Vorkammer (10) zur Ausbreitungskammer (14) liegt (Figur 1).

3. Einrichtung nach Anspruch 2, **dadurch gekennzeichnet,** daß der Deckel (36) mit Hilfe einer Zugstange (34) und der Schmelz-Schraube (46) auf der Austrittsöffnung der Verbindung (12) dichtend aufliegt (Figur 1).

4. Einrichtung nach Anspruch 3, **dadurch gekennzeichnet,** daß die Schmelz-Schraube (46) Bestandteil eines Gegenlagers (38) ist, das an der Eintrittsöffnung der Verbindung (12) angeordnet ist, wobei das Gegenlager (38) bevorzugt ein Dreibein (42) umfaßt (Figur 1).

5. Einrichtung nach Anspruch 2, 3 oder 4, **dadurch gekennzeichnet,** daß der Deckel (36) eine Anzahl von dünnwandigen Rohren (37a) besitzt, die in ein Blechgehäuse (37b) eingeschlossen sind (Figur 1).

6. Einrichtung nach Anspruch 1, **dadurch gekennzeichnet,** daß die Trennwand (18) einen Deckel (51) und einen Schmelz-Lagerbolzen (54) umfaßt, wobei der Deckel (51) mit Hilfe des Schmelz-Lagerbolzens (54) dichtend in der Verbindung (12) von der Vorkammer (10) zur Ausbreitungskammer (14) liegt (Figur 2).

7. Einrichtung nach Anspruch 6, **dadurch gekennzeichnet,** daß der Deckel (51) innerhalb der Verbindung (12) angeordnet ist und mit Hilfe des Schmelz-Lagerbolzens (54) von innen an eine Dichtfläche (50) drückbar ist (Figur 2).

8. Einrichtung nach Anspruch 7, **dadurch gekennzeichnet,** daß innerhalb der Verbindung (12) eine konische Dichtfläche (50) vorgesehen ist, an der der Deckel (51) anliegt (Figur 2).

9. Einrichtung nach Anspruch 6, 7 oder 8, **dadurch gekennzeichnet,** daß der Deckel (51) über eine Druckstange (56) mit dem Schmelz-Lagerbolzen (54) verbunden ist (Figur 2).

10. Einrichtung nach einem der Ansprüche 6 bis 9, **dadurch gekennzeichnet,** daß innerhalb der Verbindung (12) eine Auskleidung (26) aus Metall vorgesehen ist, an der der Schmelz-Lagerbolzen (54) - bevorzugt über zwei Augen (53) - befestigt ist (Figur 2).

11. Einrichtung nach Anspruch 9 oder 10, **dadurch gekennzeichnet,** daß der Deckel (51) eine Öffnung (52) aufweist, über die das Spannglied (55) der Druckstange (56) von der Ausbreitungskammer (14) aus betätigbar ist (Figur 2).

12. Einrichtung nach Anspruch 1, **dadurch gekennzeichnet,** daß die Trennwand (18) mindestens einen Deckel (60) umfaßt, der mittels eines in einer Schmelznaht (61) eingeschweißten Bolzens (62) dichtend in die Verbindung (12) einspannbar ist (Figur 3).

13. Einrichtung nach Anspruch 12, **dadurch gekennzeichnet,** daß in der Verbindung (12) ein vorzugsweise ringförmiger Dichtkörper (58) vorgesehen ist, gegen den sich der Rand des Deckels (60) abstützt (Figur 3).

14. Einrichtung nach Anspruch 12 oder 13, **dadurch gekennzeichnet,** daß ein weiterer Deckel (63) vorgesehen ist, und daß der Bolzen (62) ein Schraubbolzen ist, der durch den weiteren Deckel (63) hindurchgeführt und auf der Seite des Ausbreitungsraums (14) mit einer Montagemutter (64) versehen ist (Figur 3).

15. Einrichtung nach Anspruch 12, **dadurch gekennzeichnet,** daß der Bolzen (62) etwa zentral angeordnet ist (Figur 3).

16. Einrichtung nach Anspruch 1, **dadurch gekennzeichnet,** daß die Trennwand (18) einen Schließdeckel (65) umfaßt, der mit einer Hülse (66) verbunden ist und der mittels der Hülse (66) dichtend in die Verbindung (12) einspannbar ist, wobei die Hülse (66) als Schmelzhülse und/oder die Hülsenverbindung (66s) als Schmelzverbindung ausgeführt ist (Figur 4).

17. Einrichtung nach Anspruch 16, **dadurch gekennzeichnet,** daß in der Verbindung (12) eine vorzugsweise ringförmige Dichtung (24a) vorgesehen ist, gegen die sich der Rand des Schließdeckels (65) abstützt (Figur 4).

18. Einrichtung nach Anspruch 16 oder 17, **dadurch gekennzeichnet,** daß der zentrale Teil des Schließdeckels (65) als Schmelzhülse ausgebildet ist (Figur 4).

19. Einrichtung nach Anspruch 16, 17 oder 18, **dadurch gekennzeichnet,** daß die Trennwand (18) zusätzlich einen Deckel (36) umfaßt, der mittels einer Montageschraube (67) am Schließdeckel (65) befestigbar ist.

20. Einrichtung nach Anspruch 19, **dadurch gekennzeichnet,** daß der Deckel (36) eine Anzahl dünnwandiger Rohre (37a) besitzt, die in ein Blechgehäuse (37b) eingeschlossen sind (Figur 4).

21. Einrichtung nach Anspruch 19 oder 20, **dadurch gekennzeichnet,** daß der Deckel (36) mit einem Gewicht (69) an einem Ausleger (68) versehen ist.

22. Einrichtung nach Anspruch 1, **dadurch gekennzeichnet,** daß die Trennwand (18) einen an der Verbindung (12) angeordneten Rahmen (24c), einen Deckel (70), ein Gegenlager (71) und ein Verbindungselement (72) mit Schmelzbauteil (73) zwischen dem Deckel (70) und dem Gegenlager (71) aufweist, wobei sich der Deckel (70) von außen dichtend gegen den Rahmen (24c) und wobei sich das Gegenlager (71) von innen gegen den Rahmen (24c) abstützt (Figur 5).

23. Einrichtung nach Anspruch 22, **dadurch gekennzeichnet,** daß das Gegenlager (71) ein Dreibein (42) umfaßt (Figur 5).

24. Einrichtung nach Anspruch 22 oder 23, **dadurch gekennzeichnet,** daß das Schmelzbauteil (73) eine Schmelzhülse ist, und daß das Verbindungselement (72) einen Bolzen besitzt, der mit der Schmelzhülse verschraubbar ist (Figur 5).

25. Einrichtung nach Anspruch 23 und 24, **dadurch gekennzeichnet,** daß die Schmelzhülse im Bereich der Nabe des Dreibeins (42) angeordnet ist (Figur 5).

26. Einrichtung nach einem der Ansprüche 22 bis 25, **dadurch gekennzeichnet,** daß der Deckel (70) eine vorzugsweise runde Metallplatte ist (Figur 5).

27. Einrichtung nach einem der Ansprüche 22 bis 26, **dadurch gekennzeichnet,** daß der Deckel (70) mit einem Ausleger (68) versehen ist, an dem ein Gewicht (69) angebracht ist (Figur 5).

28. Einrichtung nach Anspruch 1, **dadurch gekennzeichnet,** daß die Trennwand (18) einen an der Verbindung (12) angeordneten Rahmen (24), einen Deckel (76) und ein Spannbauteil (79) mit Schmelzbauteil (80) aufweist, wobei der Deckel (76) mit Hilfe des Spannbauteils (79) dichtend am Rahmen (24) anliegt (Figur 6).

29. Einrichtung nach Anspruch 28, **dadurch gekennzeichnet,** daß das Spannbauteil (79) eine Zugstange (81) und das Schmelzbauteil (80) eine auf der Zugstange (81) aufschraubbare Schmelz-Spannmutter besitzt (Figur 6).

30. Einrichtung nach Anspruch 29, **dadurch gekennzeichnet,** daß die Zugstange (81) schräg im Schacht (28) angeordnet ist (Figur 6).

31. Einrichtung nach einem der Ansprüche 28 bis 30, **dadurch gekennzeichnet,** daß das Spannbauteil (79) einerseits am Deckel (76) gelagert und andererseits im Bereich des Bodens gegengelagert ist (Figur 6).

32. Einrichtung nach Anspruch 31, **dadurch gekennzeichnet,** daß als Gegenlager eine Konsole (82) vorgesehen ist, die an einem Verstärkungsrahmen (22) an der Verbindung (12) im Bereich des Vorraums (10) befestigt ist (Figur 6).

33. Einrichtung nach einem der Ansprüche 28 bis 32, **dadurch gekennzeichnet,** daß der Deckel (76) auf der Seite des Ausbreitungsraums (14) angeordnet ist (Figur 6).

34. Einrichtung nach einem der Ansprüche 28 bis 33, **dadurch gekennzeichnet,** daß der Deckel (76) als Schmelz-Dichtdeckel ausgebildet ist und eine Isolierung (78) aufweist (Figur 6).

35. Einrichtung nach Anspruch 1, **dadurch gekennzeichnet,** daß die Trennwand (18) gebildet ist aus einem Füllmaterial (85), aus einem chemischen Reaktionsmittel (84) und bevorzugt auch aus einem Zünder (86) für das Reaktionsmittel (84) (Figur 7).

36. Einrichtung nach Anspruch 35, **dadurch gekennzeichnet,** daß als Reaktionsmittel (84) Thermit vorgesehen ist (Figur 7).

37. Einrichtung nach Anspruch 35 oder 36, **dadurch gekennzeichnet,** daß der Zünder (86) zumindest teilweise auf dem Reaktionsmittel (84) angeordnet ist (Figur 7).

38. Einrichtung nach einem der Ansprüche 35 bis 37, **dadurch gekennzeichnet,** daß als Füllmaterial (85) Beton vorgesehen ist (Figur 7).

39. Einrichtung nach Anspruch 1, **dadurch gekennzeichnet,** daß die Trennwand (18) gebildet ist durch eine dünne Metallplatte (88), die die Verbindung (12) verschließt, einen Isolierkörper (91), mindestens ein Abstandsstück (90) und ein Befestigungsmittel (92, 93, 94), das den Isolierkörper (91) im Abstand vor der Metallplatte (88) festhält, wobei der Abstand durch das Abstandsstück (90) festgelegt ist (Figur 8).

40. Einrichtung nach Anspruch 39, **dadurch gekennzeichnet,** daß die dünne Metallplatte (88) mit Versteifungsrippen (89) versehen ist (Figur 8).

41. Einrichtung nach Anspruch 39 oder 40, **dadurch gekennzeichnet,** daß die Metallplatte (88) aus Stahl und/oder der Isolierkörper (91) aus Gummi und/oder das Abstandsstück (90) aus Keramik besteht (Figur 8).

42. Einrichtung nach einem der Ansprüche 39 bis 41, **dadurch gekennzeichnet,** daß das Befestigungsmittel (92, 93, 94) einen Befestigungsring (92) und einige Schrauben (93) umfaßt (Figur 8).

43. Einrichtung nach einem der Ansprüche 39 bis 42, **dadurch gekennzeichnet,** daß an der Verbindung (12) auf der Seite der Vorkammer (10) eine leicht schmelzende Wand (96) vorgesehen ist, die bevorzugt eine rippenbestückte Stahlplatte (97) umfaßt (Figur 8).

44. Einrichtung nach Anspruch 1, **dadurch gekennzeichnet,** daß die Trennwand (18) gebildet ist durch eine dünne Metallplatte (88), die die Verbindung (12) verschließt, einen hohlen Isolierkörper (100) und ein Befestigungsmittel (94, 101 bis 104), das den Isolierkörper (100) vor der Metallplatte (88) festhält, wobei mindestens eine Luftkammer (95) zur thermischen Isolierung vorgesehen ist (Figur 9).

45. Einrichtung nach Anspruch 44, **dadurch gekennzeichnet,** daß die Luftkammer (95) zwischen dem bevorzugt topfförmig ausgebildeten Isolierkörper (100) und der Metallplatte (88) gebildet ist (Figur 9).

46. Einrichtung nach Anspruch 44 oder 45, **dadurch gekennzeichnet,** daß die Metallplatte (88) aus Stahl und/oder der Isolierkörper (100) aus einem armierten Gummi besteht (Figur 9).

47. Einrichtung nach einem der Ansprüche 44 bis 46, **dadurch gekennzeichnet,** daß das Befestigungsmittel (94, 101 bis 104) einen Versteifungskörper (101), bevorzugt ein Dreibein, umfaßt, der den Isolierkörper (100) an der Metallplatte (88) dichtend befestigt (Figur 9).

48. Einrichtung nach einem der Ansprüche 44 bis 47, **dadurch gekennzeichnet,** daß das Befestigungsmittel (94, 101 bis 104) einen Flansch (94) besitzt, der am Tragschild (6) befestigt ist (Figur 9).

49. Einrichtung nach einem der Ansprüche 44 bis 48, **dadurch gekennzeichnet,** daß im Schacht (28) ein leicht schmelzender Stopfen (106) angeordnet ist (Figur 9).

50. Einrichtung nach einem der vorhergehenden Ansprüche, **dadurch gekennzeichnet**, daß die Ausbreitungskammer (14) Seitlich von der Vorkammer (10) angeordnet ist.

## Claims

1. Device for collecting reactor-meltdown products from a reactor pressure vessel (2)
a) having an antechamber (10) which is arranged underneath the reactor pressure vessel (2),
b) having an expansion chamber (14) with a base (15) which forms an expansion surface for the reactor-meltdown products,
c) having a connection (12) connecting the antechamber (10) with the expansion chamber (14), and
d) having a partition wall (18) which is arranged between the antechamber (10) and the expansion chamber (14), seals the connection (12) and can be destroyed by the reactor-meltdown products,
characterised in that the partition wall (18) consists of a plurality of portions, of which at least one portion (46, 54, 61, 66) can be thermally destroyed by the reactor-meltdown products, in which case this portion is connected with other portions of the partition wall (18) in such a way that in the event of destruction of the said one portion (46, 54, 61, 66) a flow path is freed for the reactor-meltdown products from the antechamber (10) to the expansion chamber (14).

2. Device according to claim 1, characterised in that the partition wall (18) comprises a cover (36) and a fusible screw (46), in which case the cover (36), with the aid of the fusible screw (46), lies in the connection (12) from the antechamber (10) to the expansion chamber (14) so as to seal said connection (Figure 1).

3. Device according to claim 2, characterised in that the cover (36), with the aid of a tie-rod (34) and the fusible screw (46), rests on the outlet opening of the connection (12) so as to seal said opening (Figure 1).

4. Device according to claim 3, characterised in that the fusible screw (46) is a component of a counter-bearing (38) which is arranged at the inlet opening of the connection (12), in which case the counter-bearing (38) preferably comprises a tripod (42) (Figure 1).

5. Device according to claim 2, 3 or 4, characterised in that the cover (36) has a number of thin-walled pipes (37a) which are enclosed in a sheet-metal-housing (37b) (Figure 1).

6. Device according to claim 1, characterised in that the partition wall (18) comprises a cover (51) and a fusible bearing bolt (54), in which case the cover (51), with the aid of the fusible bearing bolt (54), lies in the connection (12) from the antechamber (10) to the expansion chamber (14) so as to seal said connection (Figure 2).

7. Device according to claim 6, characterised in that the cover (51) is arranged inside the connection (12) and, with the aid of the fusible bearing bolt (54), can be pressed from within against a sealing surface (50) (Figure 2).

8. Device according to claim 7, characterised in that provided inside the connection (12) there is a conical sealing surface (50) against which the cover (51) rests (Figure 2).

9. Device according to claim 6, 7 or 8, characterised in that the cover (51) is connected with the fusible bearing bolt (54) by way of a thrust rod (56) (Figure 2).

10. Device according to one of the claims 6 to 9, characterised in that provided inside the connection (12) there is lining (26) which is made of metal and to which the fusible bearing bolt (54) is secured - preferably by way of two eyelets (53) - (Figure 2).

11. Device according to claim 9 or 10, characterised in that the cover (51) has an opening (52) by way of which the tensioning element (55) of the thrust rod (56) can be actuated from the expansion chamber (14) (Figure 2).

12. Device according to claim 1, characterised in that the partition wall (18) comprises at least one cover (60) which can be clamped in the connection (12) in a sealing manner by means of a bolt (62), which is welded in a fusible seam (61) (Figure 3).

13. Device according to claim 12, characterised in that provided in the connection (12) there is a sealing body (58) which is preferably annular and against which the edge of the cover (60) is stayed (Figure 3).

14. Device according to claim 12 or 13, characterised in that a further cover (63) is provided, and in that the bolt (62) is a screw bolt which is guided through the further cover (63) and is provided with a mounting nut (64) on the side of the expansion chamber (14) (Figure 3).

15. Device according to claim 12, characterised in that the bolt (62) is arranged so as to be substantially central (Figure 3).

16. Device according to claim 1, characterised in that the partition wall (18) comprises a closing cover (65) which is connected with a sleeve (66) and which can be clamped in the connection (12) in a sealing manner by means of the sleeve (66), in which case the sleeve (66) is realized as a fusible sleeve and/or the sleeve connection (66s) is realized as a fusible connection (Figure 4).

17. Device according to claim 16, characterised in that provided in the connection (12) there is a seal (24a) which is preferably annular and against which the edge of the closing cover (65) is stayed (Figure 4).

18. Device according to claim 16 or 17, characterised in that the central portion of the closing cover (65) is formed as a fusible sleeve (Figure 4).

19. Device according to claim 16, 17 or 18, characterised in that the partition wall (18) additionally comprises a cover (36) which can be secured to the closing cover (65) by means of a mounting screw (67).

20. Device according to claim 19, characterised in that the cover (36) has a number of thin-walled pipes (37a) which are enclosed in a sheet-metal housing (37b) (Figure 4).

21. Device according to claim 19 or 20, characterised in that the cover (36) is provided with a weight (69) on a cantilevered arm (68).

22. Device according to claim 1, characterised in that the partition wall (18) has a frame (24c), which is arranged on the connection (12), a cover (70), a counter-bearing (71) and a connecting element (72) with a fusible component (73) between the cover (70) and the counter-bearing (71), in which case the cover (70) is stayed from without in a sealing manner against the frame (24c) and the counter-bearing (71) is stayed from within against the frame (24c) (Figure 5).

23. Device according to claim 22, characterised in that the counter-bearing (71) comprises a tripod (42) (Figure 5).

24. Device according to claim 22 or 23, characterised in that the fusible component (73) is a fusible sleeve, and in that the connecting element (72) has a bolt which can be screwed together with the fusible sleeve (Figure 5).

25. Device according to claim 23 and 24, characterised in that the fusible sleeve is arranged in the region of the hub of the tripod (42) (Figure 5).

26. Device according to one of the claims 22 to 25, characterised in that the cover (70) is a metal plate which is preferably round (Figure 5).

27. Device according to one of the claims 22 to 26, characterised in that the cover (70) is provided with a cantilevered arm (68) to which a weight (69) is attached (Figure 5).

28. Device according to claim 1, characterised in that the partition wall (18) has a frame (24) which is arranged at the connection (12), a cover (76) and a tensioning component (79) having a fusible component (80), in which case the cover (76), with the aid of the tensioning component (79), rests in a sealing manner against the frame (24) (Figure 6).

29. Device according to claim 28, characterised in that the tensioning component (79) has a tie-rod (81) and the fusible component (80) has a fusible tensioning nut which can be screwed on the tie-rod (81) (Figure 6).

30. Device according to claim 29, characterised in that the tie-rod (81) is arranged obliquely in the shaft (28) (Figure 6).

31. Device according to one of the claims 28 to 30, characterised in that the tensioning component (79) is mounted, on the one hand, on the cover (76) and is counter-mounted, on the other hand, in the region of the base (Figure 6).

32. Device according to claim 31, characterised in that provided as the counter-bearing there is a bracket (82) which is secured to a reinforcement frame (22) at the connection (12) in the region of the antechamber (10) (Figure 6).

33. Device according to one of the claims 28 to 32, characterised in that the cover (76) is arranged on the side of the expansion chamber (14) (Figure 6).

34. Device according to one of the claims 28 to 33, characterised in that the cover (76) is formed as a fusible sealing cover and has a means of insulation (78) (Figure 6).

35. Device according to claim 1, characterised in that the partition wall (18) is formed from a filler material (85), from a chemical reagent (84) and preferably also from an igniter (86) for the reagent (84) (Figure 7).

36. Device according to claim 35, characterised in that thermite is provided as the reagent (84) (Figure 7).

37. Device according to claim 35 or 36, characterised in that the igniter (86) is arranged at least in part on the reagent (84) (Figure 7).

38. Device according to one of the claims 35 to 37, characterised in that concrete is provided as the filler material (85) (Figure 7).

39. Device according to claim 1, characterised in that the partition wall (18) is formed by a thin metal plate (88) which seals the connection (12), an insulating body (91), at least one spacer (90) and a means of securement (92, 93, 94) which holds the insulating body (91) fast at a distance from and in front of the metal plate (88), in which case the distance is fixed by the spacer (90) (Figure 8).

40. Device according to claim 39, characterised in that the thin metal plate (88) is provided with reinforcement ribs (89) (Figure 8).

41. Device according to claim 39 or 40, characterised in that the metal plate (88) consists of steel and/or the insulating body (91) consists of rubber and/or the spacer (90) consists of ceramics (Figure 8).

42. Device according to one of the claims 39 to 41, characterised in that the means of securement (92, 93, 94) comprises a securing ring (92) and several screws (93) (Figure 8).

43. Device according to one of the claims 39 to 42, characterised in that provided at the connection (12) on the side of the antechamber (10) there is a readily fusible wall (96) which preferably comprises a steel plate (97) which is fitted with ribs (Figure 8).

44. Device according to claim 1, characterised in that the partition wall (18) is formed by a thin metal plate (88) which seals the connection (12), a hollow insulating body (100) and a means of securement (94, 101 to 104) which holds the insulating body (100) fast in front of the metal plate (88), with at least one air chamber (95) being provided for thermal insulation (Figure 9).

45. Device according to claim 44, characterised in that the air chamber (95) is formed between the insulating body (100), which is preferably formed in a pot-like manner, and the metal plate (88) (Figure 9).

46. Device according to claim 44 or 45, characterised in that the metal plate (88) consists of steel and/or the insulating body (100) consists of a reinforced rubber (Figure 9).

47. Device according to one of the claims 44 to 46, characterised in that the means of securement (94, 101 to 104) comprises a reinforcement body (101), preferably a tripod, which secures the insulating body (100) to the metal plate (88) in a sealing manner (Figure 9).

48. Device according to one of the claims 44 to 47, characterised in that the means of securement (94, 101 to 104) has a flange (94) which is secured to the bearing shield (6) (Figure 9).

49. Device according to one of the claims 44 to 48, characterised in that a readily fusible plug (106) is arranged in the shaft (28) (Figure 9).

50. Device according to one of the preceding claims, characterised in that the expansion chamber (14) is arranged laterally relative to the antechamber (10).

## Revendications

1. Dispositif permettant de récupérer les produits de fusion du coeur issus de la cuve d'un réacteur (2),
a) comprenant une préchambre (10) située sous la cuve du réacteur (2),
b) comprenant une chambre de propagation (14) pourvue d'un fond (15) qui forme une surface de propagation pour les produits de fusion du coeur,
c) comprenant une communication (12) reliant la préchambre (10) à la chambre de propagation (14), et
d) comprenant une cloison (18) fermant la communication (12) et située entre la préchambre (10) et la chambre de propagation (14), qui peut être détruite par les produits de fusion du coeur,
caractérisé en ce que la cloison (18) est formée de plusieurs parties parmi lesquelles au moins une partie (46, 54, 61, 66) peut subir une destruction thermique par les produits de fusion du coeur, cette partie étant reliée à d'autres parties de la cloison (18) de manière à ce que, en cas de destruction de la partie mentionnée (46, 54, 61, 66), une voie d'écoulement pour les produits de fusion du coeur soit libérée de la préchambre (10) dans la chambre de propagation (14).

2. Dispositif selon la revendication 1, caractérisé en ce que la cloison (18) comprend un couvercle (36) et une vis fusible (46), le couvercle (36) étant disposé de manière étanche, à l'aide de la vis fusible (46), dans la communication (12) menant de la préchambre (10) à la chambre de propagation (14) (Figure 1).

3. Dispositif selon la revendication 2, caractérisé en ce que le couvercle (36) est appuyé de manière étanche sur l'ouverture de sortie de la communication (12) à l'aide d'une barre de traction (34) et de la vis fusible (46).

4. Dispositif selon la revendication 3, caractérisé en ce que la vis fusible (46) fait partie d'une butée (38) qui est située au niveau de l'ouverture d'entrée de la communication (12), la butée (38) comprenant, de préférence, un trépied (42) (Figure 1).

5. Dispositif selon la revendication 2, 3 ou 4, caractérisé en ce que le couvercle (36) possède un nombre de tubes (37a) à paroi mince qui sont enfermés dans une enveloppe en tôle (37b) (Figure 1).

6. Dispositif selon la revendication 1, caractérisé en ce que la cloison (18) comprend un couvercle (51) et un axe d'appui fusible (54), le couvercle (51) étant disposé de manière étanche, à l'aide de l'axe d'appui fusible (54), dans la communication (12) menant de la préchambre (10) à la chambre de propagation (14) (Figure 2).

7. Dispositif selon la revendication 6, caractérisé en ce que le couvercle (51) est situé à l'intérieur de la communication (12) et peut être pressé de l'intérieur sur une surface d'étanchéité (50) à l'aide de l'axe d'appui fusible (54) (Figure 2).

8. Dispositif selon la revendication 7, caractérisé en ce que l'on prévoit, à l'intérieur de la communication (12), une surface d'étanchéité conique (50) avec laquelle le couvercle (51) est en contact (Figure 2).

9. Dispositif selon la revendication 6, 7 ou 8, caractérisé en ce que le couvercle (51) est relié à l'axe d'appui fusible (54) par le biais d'une barre de compression (56) (Figure 2).

10. Dispositif selon l'une des revendications 6 à 9, caractérisé en ce que l'on prévoit, à l'intérieur de la communication (12), un revêtement (26) en métal sur lequel est fixé l'axe d'appui fusible (54) - de préférence au moyen de deux oeillets (53) - (Figure 2).

11. Dispositif selon la revendication 9 ou 10, caractérisé en ce que le couvercle (51) est pourvu d'une ouverture (52) par laquelle l'élément de serrage (55) de la barre de compression (56) peut être actionné depuis la chambre de propagation (14) (Figure 2).

12. Dispositif selon la revendication 1, caractérisé en ce que la cloison (18) comprend au moins un couvercle (60) qui peut être serré de manière étanche dans la communication (12) au moyen d'un boulon (62) soudé dans un joint fusible (61) (Figure 3).

13. Dispositif selon la revendication 12, caractérisé en ce que l'on prévoit, dans la communication (12), un élément d'étanchéité (58), de préférence annulaire, sur lequel s'appuie le bord du couvercle (60) (Figure 3).

14. Dispositif selon la revendication 12 ou 13, caractérisé en ce qu'un autre couvercle (63) est prévu, et en ce que le boulon (62) est un boulon fileté qui passe à travers l'autre couvercle (63) et est pourvu, sur le côté de la chambre de propagation (14), d'un écrou d'assemblage (64) (Figure 3).

15. Dispositif selon la revendication 12, caractérisé en ce que le boulon (62) est situé de manière à peu près centrale (Figure 3).

16. Dispositif selon la revendication 1, caractérisé en ce que la cloison (18) comprend un couvercle de fermeture (65) qui est relié à une douille (66) et qui peut être serré de manière étanche dans la communication (12) au moyen de la douille (66), la douille (66) étant exécutée en tant que douille fusible et/ou la jonction de la douille (66s) étant exécutée en tant que jonction fusible (Figure 4).

17. Dispositif selon la revendication 16, caractérisé en ce que l'on prévoit, dans la communication (12), une garniture d'étanchéité (24a), de préférence annulaire, sur laquelle s'appuie le bord du couvercle de fermeture (65) (Figure 4).

18. Dispositif selon la revendication 16 ou 17, caractérisé en ce que la partie centrale du couvercle de fermeture (65) est exécutée en tant que douille fusible (Figure 4).

19. Dispositif selon la revendication 16, 17 ou 18, caractérisé en ce que la cloison (18) comprend, en plus, un couvercle (36) qui peut être fixé sur le couvercle de fermeture (65) au moyen d'un boulon de montage (67).

20. Dispositif selon la revendication 19, caractérisé en ce que le couvercle (36) possède un nombre de tubes (37a) à paroi mince qui sont enfermés dans une enveloppe en tôle (37b) (Figure 4).

21. Dispositif selon la revendication 19 ou 20, caractérisé en ce que le couvercle (36) est pourvu d'un poids (69) sur une console (68).

22. Dispositif selon la revendication 1, caractérisé en ce que la cloison (18) comprend un cadre (24c) situé sur la communication (12), un couvercle (70), une butée (71) et un élément de liaison (72) avec un élément fusible (73) entre le couvercle (70) et la butée (71), le couvercle (70) s'appuyant de manière étanche, de l'extérieur, sur le cadre (24c) et la butée (71) s'appuyant de l'intérieur sur le cadre (24c) (Figure 5).

23. Dispositif selon la revendication 22, caractérisé en ce que la butée (71) comprend un trépied (42) (Figure 5).

24. Dispositif selon la revendication 22 ou 23, caractérisé en ce que l'élément fusible (73) est une douille fusible et en ce que l'élément de liaison (72) comprend un boulon qui peut être vissé avec la douille fusible (Figure 5).

25. Dispositif selon les revendications 23 et 24, caractérisé en ce que la douille fusible est située dans la région du moyeu du trépied (42) (Figure 5).

26. Dispositif selon l'une des revendications 22 à 25, caractérisé en ce que le couvercle (70) est, de préférence, une plaque métallique ronde (Figure 5).

27. Dispositif selon l'une des revendications 22 à 26, caractérisé en ce que le couvercle (70) est pourvu d'une console (68) sur laquelle est installé un poids (69) (Figure 5).

28. Dispositif selon la revendication 1, caractérisé en ce que la cloison (18) comprend un cadre (24) situé sur la communication (12), un couvercle (76) et un élément de serrage (79) avec un élément fusible (80), le couvercle (76) étant en contact étanche avec le cadre (24) grâce à l'élément de serrage (79) (Figure 6).

29. Dispositif selon la revendication 28, caractérisé en ce que l'élément de serrage (79) comprend une barre de traction (81) et l'élément fusible (80) possède un écrou tendeur fusible pouvant être vissé sur la barre de traction (81) (Figure 6).

30. Dispositif selon la revendication 29, caractérisé en ce que la barre de traction (81) est disposée de manière oblique dans la cheminée (28) (Figure 6).

31. Dispositif selon l'une des revendications 28 à 30, caractérisé en ce que l'élément de serrage (79) est, d'une part, monté sur le couvercle (76) et, d'autre part, se trouve en butée dans la région du fond (Figure 6).

32. Dispositif selon la revendication 31, caractérisé en ce que l'on prévoit, en tant que butée, une console (82) qui est fixée sur un cadre de renfort (22) sur la communication (12), dans la région de la préchambre (10) (Figure 6).

33. Dispositif selon l'une des revendications 28 à 32, caractérisé en ce que le couvercle (76) est situé sur le côté de la chambre de propagation (14) (Figure 6).

34. Dispositif selon l'une des revendications 28 à 33, caractérisé en ce que le couvercle (76) est exécuté en tant que couvercle d'étanchéité fusible et est pourvu d'une isolation (78) (Figure 6).

35. Dispositif selon la revendication 1, caractérisé en ce que la cloison (18) est formée d'un matériau de remplissage (85), d'un agent de réaction chimique (84) et, de préférence, également d'une amorce (86) pour l'agent de réaction chimique (84) (Figure 7).

36. Dispositif selon la revendication 35, caractérisé en ce que l'on prévoit, en tant qu'agent de réaction (84), de la thermite (Figure 7).

37. Dispositif selon la revendication 35 ou 36, caractérisé en ce que l'amorce (86) est située, au moins partiellement, sur l'agent de réaction (84) (Figure 7).

38. Dispositif selon l'une des revendications 35 à 37, caractérisé en ce que l'on prévoit, en tant que matériau de remplissage (85), du béton (Figure 7).

39. Dispositif selon la revendication 1, caractérisé en ce que la cloison (18) est formée par une plaque métallique (88) mince qui ferme la communication (12), un corps isolant (91), au moins un écarteur (90) et un moyen de fixation (92, 93, 94) qui maintient le corps isolant (91) à distance de la plaque métallique (88), la distance étant fixée par l'écarteur (90) (Figure 8).

40. Dispositif selon la revendication 39, caractérisé en ce que la plaque métallique (88) mince est pourvue de nervures raidisseuses (89) (Figure 8).

41. Dispositif selon la revendication 39 ou 40, caractérisé en ce que la plaque métallique (88) est formée d'acier et/ou le corps isolant (91) de caoutchouc et/ou l'écarteur (90) de céramique (Figure 8).

42. Dispositif selon l'une des revendications 39 à 41, caractérisé en ce que le moyen de fixation (92, 93, 94) comprend une bague de fixation (92) et quelques boulons (93) (Figure 8).

43. Dispositif selon l'une des revendications 39 à 42, caractérisé en ce que l'on prévoit, sur la communication (12), du côté de la préchambre (10), une paroi (96) facilement fusible qui comprend, de préférence, une plaque en acier (97) garnie de nervures (Figure 8).

44. Dispositif selon la revendication 1, caractérisé en ce que la cloison (18) est formée par une plaque métallique (88) mince qui ferme la communication (12), un corps isolant (100) creux et un moyen de fixation (94, 101 à 104) qui maintient le corps isolant (100) devant la plaque métallique (88), au moins une chambre à air (95) étant prévue en vue de l'isolation thermique (Figure 9).

45. Dispositif selon la revendication 44, caractérisé en ce que la chambre à air (95) est formée entre le corps isolant (100), qui a, de préférence, la forme d'un pot, et la plaque métallique (88) (Figure 9).

46. Dispositif selon la revendication 44 ou 45, caractérisé en ce que la plaque métallique (88) est formée d'acier et/ou le corps isolant (100) est formé d'un caoutchouc armé (Figure 9).

47. Dispositif selon l'une des revendications 44 à 46, caractérisé en ce que le moyen de fixation (94, 101 à 104) comprend un corps raidisseur (101), de préférence un trépied, qui fixe le corps isolant (100) sur la plaque métallique (88) de manière étanche (Figure 9).

48. Dispositif selon l'une des revendications 44 à 47, caractérisé en ce que le moyen de fixation (94, 101 à 104) comprend une bride (94) qui est fixée sur le bouclier porteur (6) (Figure 9).

49. Dispositif selon l'une des revendications 44 à 48, caractérisé en ce qu'un tampon facilement fusible (106) est situé dans la cheminée (28) (Figure 9).

50. Dispositif selon l'une des revendications précédentes, caractérisé en ce que la chambre de propagation (14) est située latéralement par rapport à la préchambre (10).
